# EUROPÄISCHE PATENTSCHRIFT

(11) **EP 1 723 446 B1**
(45) Veröffentlichungstag und Bekanntmachung des Hinweises auf die Patenterteilung: **30.07.2008**
(21) Anmeldenummer: 05715798.4
(22) Anmeldetag: 07.03.2005
(51) Int. Cl.: G01V 8/20

(54) **ZUGANGSKONTROLLEINRICHTUNG**
ACCESS CONTROL DEVICE
DISPOSITIF DE CONTROLE D'ACCES

(30) Priorität: 09.03.2004 DE 102004011780
(43) Veröffentlichungstag der Anmeldung: 22.11.2006
(73) Patentinhaber: Reime, Gerd, 77815 Bühl (DE)
(72) Erfinder: Reime, Gerd, 77815 Bühl (DE)
(74) Vertreter: Reinhardt, Harry
(86) Internationale Anmeldenummer: PCT/EP2005/002387
(87) Internationale Veröffentlichungsnummer: WO 2005/088349

(56) Entgegenhaltungen:
- EP-A- 0 380 186
- EP-A- 0 391 883
- DE-A1- 2 936 201
- GB-A- 2 278 916
- NL-A- 9 101 819
- PATENT ABSTRACTS OF JAPAN Bd. 009, Nr. 186 (P-377), 2. August 1985 (1985-08-02) -& JP 60 057210 A (ANRITSU DENKI KK), 3. April 1985 (1985-04-03)

## Beschreibung

Die Erfindung betrifft eine Kontrolleinrichtung für einen zu überwachenden Raum auf den Zugang wenigstens eines Körpers über einen Zugangsbereich nach dem Oberbegriff des Anspruches 1 sowie ein Verfahren zum Kontrollieren eines Zugangsbereich nach dem Oberbegriff des Anspruch 17.

Zur Kontrolle eines Durchganges, z.B. einer offenen Tür werden in der Regel handelsübliche Lichtschranken eingesetzt. Diese sind in einer, auf die durchschnittliche Personengröße abgestimmte Höhe über dem Fußboden, angeordnet, z.B. 80 cm. Dabei wird eine sich kriechend bewegende Person, deren Scheitelpunkt kleiner als 80 cm ist, nicht mehr erfasst. Das gleiche gilt für eine Person, die die Lichtschranke überspringt.

Um diesem Problem zu begegnen, werden Lichtschranken in mehreren Höhen angebracht, z.B. alle 20 cm. So wird z.B. in der DE 101 46 639 A1 ein Lichtschrankensystem vorgeschlagen, bei der Licht in mehrere räumlich getrennte Teilstrahlen zerlegt wird, die durch die Überwachungsstrecke geführt sind. Somit wird ein optisches Gitter erzeugt, dass von keiner Person mehr unbemerkt passiert werden kann. Jedoch bleibt zwischen den Lichtstrahlen jeweils ein Bereich frei, durch den z. B. ein kleiner Gegenstand, wie z. B. eine nicht bezahlte Ware oder eine Waffe, durchgereicht werden könnte.

Eine sehr hohe Anzahl von Lichtschranken, z. B. alle 3 cm, erfüllt im Wesentlichen die Anforderung nach lückenloser Überwachung, aber führt auch zu entsprechend hohen Kosten.

Auch können Insekten, die eine dieser Lichtschranken durchfliegen oder über den Lichtaustrittspunkt oder Eintrittspunkt krabbeln, zu Fehlauslösungen führen.

Aus der DE 100 55 689 A1 ist ein Triangulationslichtgitter mit mehreren Lichtgittem bekannt, bei dem eine Kameraüberwachung eines Lichtfächers mit Zeilenbildsensoren erfolgt, um durch ein Differenzbildverfahren Fehlerfälle auszugleichen oder zu erkennen.

In der DE 102 37 202 A1 wird ein Lichtmischstab vorgeschlagen, der zum Homogenisieren eines Lichtbündels an seinen Seitenflächen Lumineszenzdioden aufweist, deren Abstrahlcharakteristik auf den Innenraum des Lichtmischstabs gerichtet ist. Damit werden homogenisierte Leuchtfelder erzeugt.

Eine Einrichtung zum Erfassen der Stellung eines Objekts ist aus der US 3,758,197 A bekannt, bei der ein Lichtfeld durch die gefrostete Oberfläche eines Lichtleiters ausgestrahlt wird. Dieses Lichtfeld wird empfangsseitig über Prismen abbildend empfangen. Dies führt dazu, dass schräg oder winklig einfallendes Licht unberücksichtigt bleibt, was für die dortige Anwendung der Überwachung des Durchhangs eines Bands ohne Bedeutung ist. Im Bereich der Durchgangskontrolle könnte dies jedoch zu nicht überwachten Bereichen führen.

Aus der EP 1 185 822 B1 ist eine optische Barriere bekannt, bei der Lichtleiter mittels eines streuenden Streifen entlang ihrer Seitenfläche versehen sind, um Licht quer zu ihrer Längserstreckung auszusenden bzw. zu empfangen.

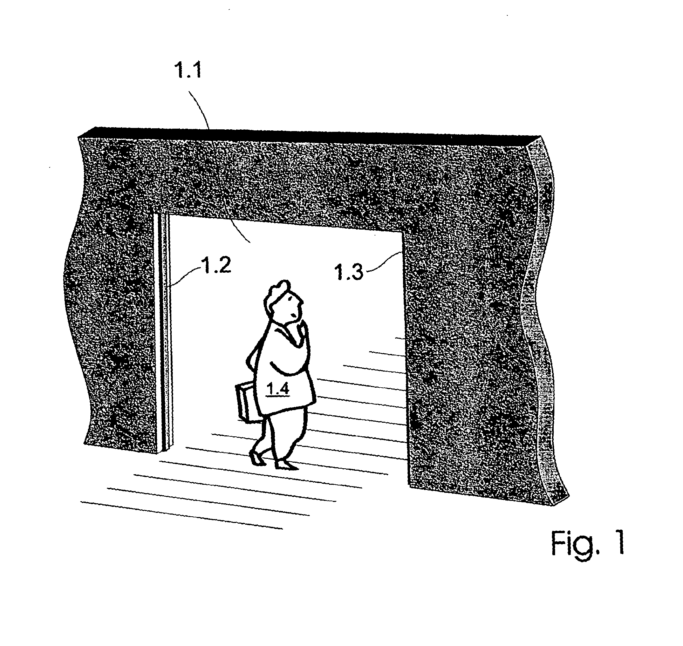

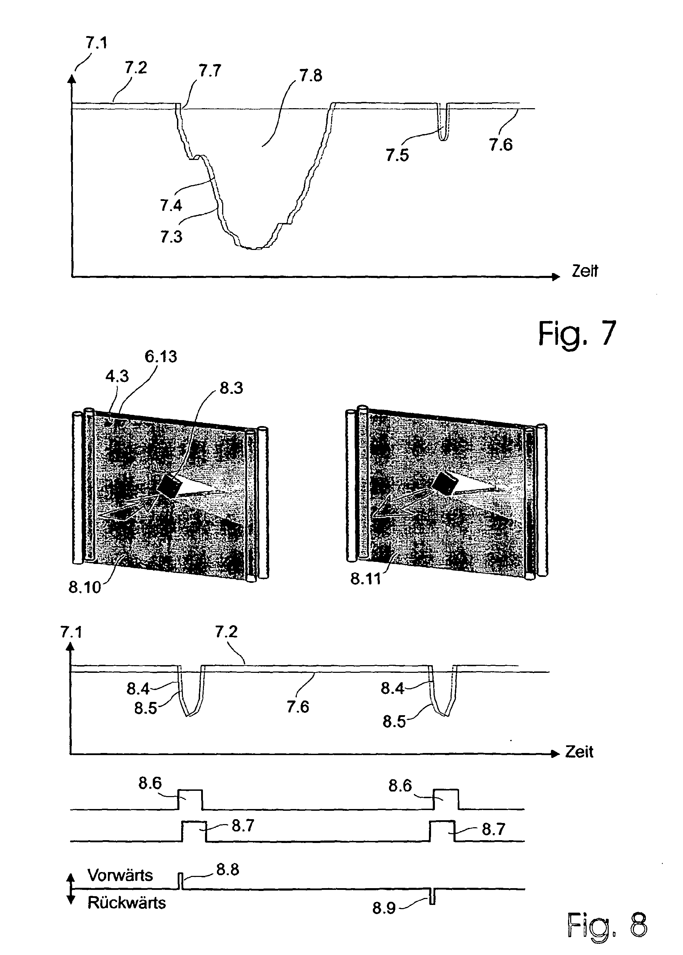

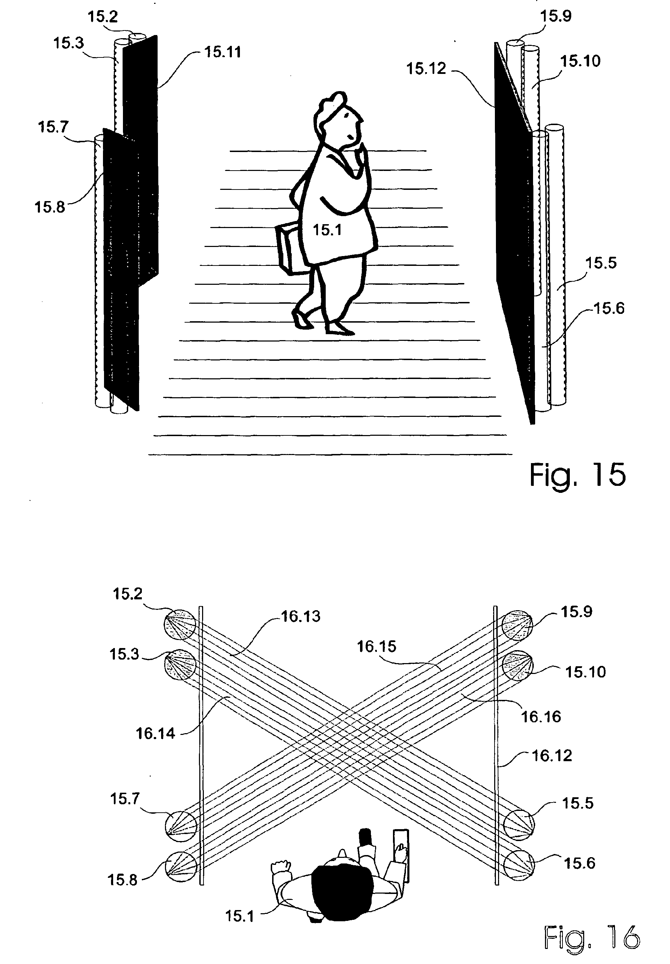

Aus der EP 0 828 233 A2 sind verschiedene optoelektronische Vorrichtungen zur Detektion der Anzahl von Personen bekannt, die einen Durchgang passieren. Gearbeitet wird dort mit reflektiven und absorptiven Messstrahlen bei einer angenommenen durchschnittlichen Schulterbreite von 40 bis 50 cm, um einen sinnvollen Maximalabstand der verschiedenen Sensoren bzw. Photoempfänger zu bestimmen, sowie mit einem Minimalabstand der Photoempfänger von 20 cm, um ein Übersprechen der verschiedenen Empfangsstrecken zu vermeiden. Eine Richtungsdetektion der Bewegungsrichtung der Passanten erfolgt durch Anordnung verschiedener Strahlenfelder in Längsrichtung des zu passierenden und überwachten Durchgangs. Die verschiedenen Systeme arbeiten entweder mit Lichtstrahlen von der Decke ausgehend unter verschiedenem vertikalen Winkel und/oder vertikal nach unten(Fig. 1; 2A, 2B; 7A, 7B; 24a, 24B) bzw. ggf. fächerartig (Fig. 16A, 16B; 19A, 19B; 20A; 20B) oder mit horizontalen Lichtstrahlen, die den Durchgang parallel voneinander beabstandet vorzugsweise im rechten Winkel zur Bewegungsrichtung der Passanten queren (Fig.8, 9A, 9B; 13, 14A, 14B). Die vermutete Schulterbreite wird als Bestimmungsmerkmal herangezogen. Die Lichtstrahlen schneiden sich nicht im Durchgang selbst bzw. nicht in Höhe der Passanten.

Aus der WO 03/030363 A1 ist eine Anordnung von wenigstens zwei Leuchtdioden bekannt, die wechselseitig auf einen Photoempfänger einwirken. Das in der Amplitude wenigstens einer Lichtstrecke geregelte Licht wirkt zusammen mit dem Licht einer weiteren Lichtquelle so auf den Photoempfänger ein, das ein Empfangssignal ohne taktsynchrone Signalanteile entsteht. Das Empfangssignal des Photoempfängers wird einem Synchrondemodulator zugeführt, der das Empfangssignal wiederum in die beiden Signalkomponenten entsprechend den Lichtquellen zerlegt. Beide Signalkomponenten werden nach Tiefpassfilterung in einem Vergleicher miteinander verglichen. Treten Signalunterschiede auf, werden diese mittels Leistungsregelung wenigstens einer der Lichtquellen zu Null ausgeregelt.

Des Weiteren besteht oft die Forderung einer Richtungsbestimmung und der Vereinzelung von gleichzeitig durchschreitenden Personen. Bekannte optische Barrieren finden sich auch in EP 0 380 186, E0391883, DE2936201 und GB2278916.

Ausgehend von diesem Stand der Technik liegt der vorliegenden Erfindung die Aufgabe zugrunde, eine Kontrolleinrichtung zu schaffen, die einen Zugangsbereich möglichst vollständig bis zu lückenlos überwacht.

Diese Aufgabe wird durch eine Kontrolleinrichtung mit den Merkmalen des Anspruches 1 sowie ein Verfahren mit den Merkmalen des Anspruchs 17 gelöst.

Gegenüber den vorbekannten Kontrolleinrichtungen auf Lichtschrankenbasis wird nun ein flächiges diffuses Lichtfeld erzeugt, das auch diffus empfangen wird. Damit können selbst kleinste Gegenstände erfasst werden, andererseits ist es aufgrund der flächigen Abdeckung auch möglich Gegenstände erst ab einem bestimmten Schwellwert zu erfassen, so dass auch ein Insekt nicht zu einem Fehlalarm führt, aber dennoch eine entsprechende Überwachung selbst auf kleine Gegenstände hin möglich ist.

Gegebenenfalls benötigt das erfindungsgemäße System nur eine einzige Photodiode sowie ggf. eine Kompensations-LED und eine Sende-LED für die Überwachung eines Türbereiches von z.B. 2 x 2 m, während in herkömmlichen Systemen für jede der benötigten Einzel-Lichtschranken jeweils eine Photodiode als Empfänger und eine Lichtquelle als Sender verwendet wird.

Vorzugsweise kann einerseits die Bewegungsrichtung eines sich durch den Zugangsbereich bewegenden Körpers bestimmt werden, durch eine gezielte Überwachung auf den Oberkörper und Unterkörperbereich von Personen lassen sich aber auch Unstimmigkeiten beim Durchgang von Personen feststellen.

Bedarfsweise ist es zudem möglich, eine Vereinzelung von gleichzeitig den Zugangsbereich passierenden Körpern vorzunehmen und in Abhängigkeit der dabei ermittelten Ergebnisse gesonderte Kontrollmaßnahmen vorzunehmen.

Weitere Vorteile sind die Verwendbarkeit auch im Außenbereich durch völlige Unempfindlichkeit gegenüber Fremdlicht und auch Insekten. Weitergehende Vorteile ergeben sich aus der folgenden Beschreibung und den weiteren Unteransprüchen.

Im Folgenden wird die Erfindung an Hand von in den beigefügten Figuren dargestellten Ausführungsbeispielen näher erläutert. Es zeigen:
- Fig. 1: eine schematische Darstellung einer Durchgangsüberwachung in einer beliebigen Wand ohne Richtungserkennung,
- Fig. 2: eine schematische Anordnung der Lichtleiterelemente,
- Fig. 2.1: eine Ansicht eines Lichtleiterelements,
- Fig. 2.2: das vom Lichtleiterelement ausgesandte Lichtband aus Sicht des Empfängers,
- Fig. 3: Beispiele für weitere mögliche Formen eines Lichtleiterelements,
- Fig. 4, 5: den Strahlengang zwischen einem Sendelichtleiter und einem Empfangslichtleiter in Draufsicht und Vorderansicht,
- Fig. 6: eine mechanische Anordnung von zwei Lichtleitersystemen zur Richtungsdetektion mit zugehöriger Signalverarbeitung,
- Fig. 7: den Signalverlauf der Regelgrößen 6.44 und 6.41 bei Bewegung z. B. einer Person und eines kleinen Gegenstandes durch die Lichtfelder 4.3 und 6.13,
- Fig. 8: den Signalverlauf der Gesamtlichtleistung und des daraus gewonnenen digitalisierten Signals bei Durchwurf eines Gegenstands durch die Lichtfelder in verschiedenen Richtungen,
- Fig. 9: ein herkömmliches Lichtschrankensystem,
- Fig. 19: eine schematische Darstellung der Lichtstrahlen bei einer erfindungsgemäßen Durchgangskontrolle,

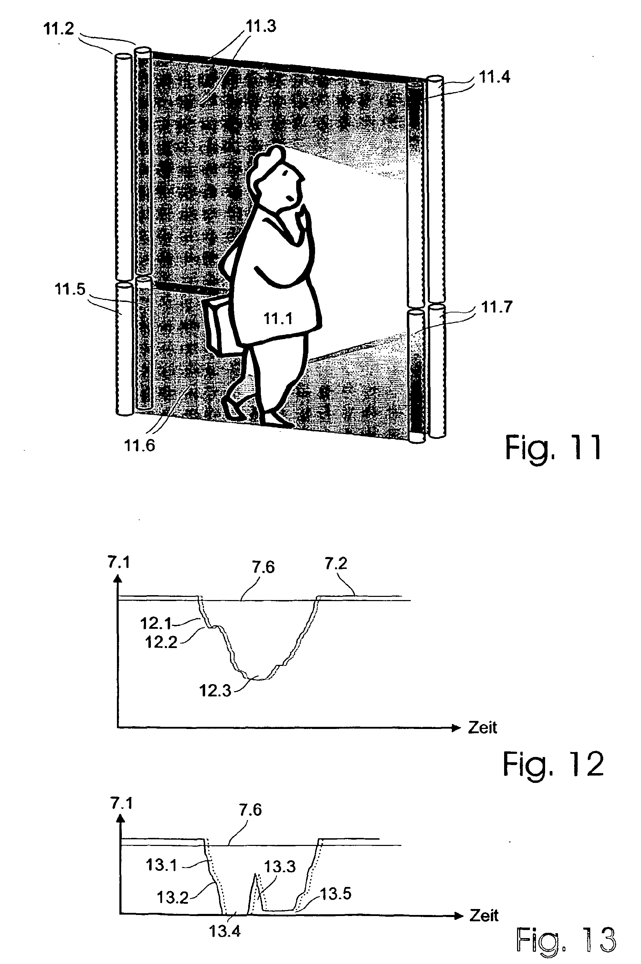

- Fig. 11: eine Durchgangskontrolle zur Personenzahlerkennung mit übereinander angeordneten Lichtfeldpaaren,

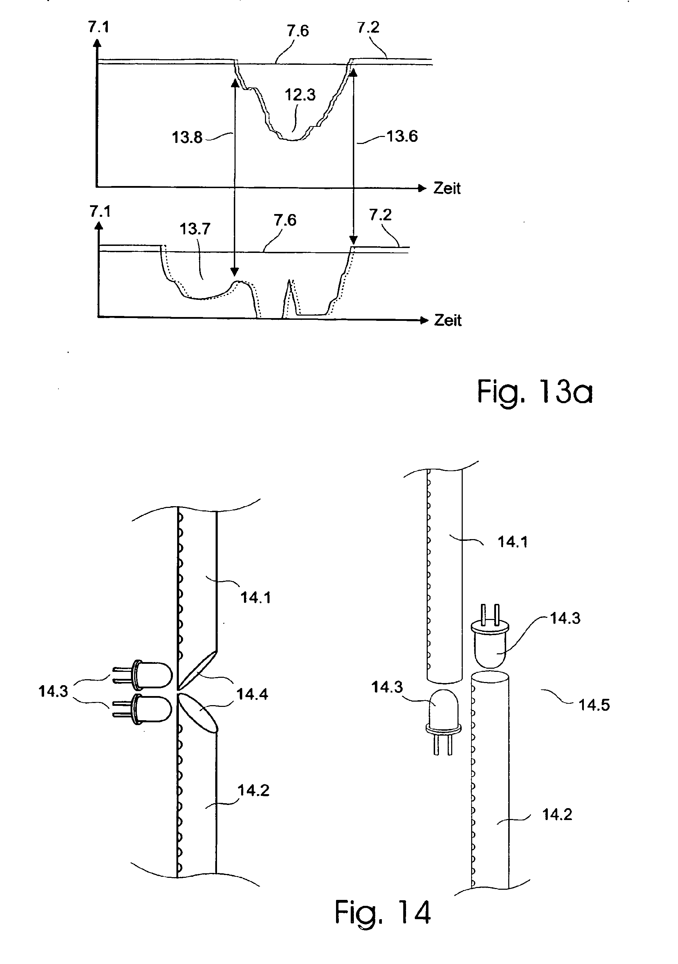

- Fig. 12,13: den Signalverlauf der Lichtfeldpaare gemäß Fig. 11 bei Durchgang einer Person,
- Fig. 13a: eine Darstellung gemäß Fig. 12 und 13 bei Durchgang einer zweiten Person im unteren Bereich,
- Fig. 14: den Übergangsbereich zwischen den Lichtpaaren gemäß Fig. 11,
- Fig. 15, 16: die Anordnung der Lichtfelder zur Personenvereinzelung in Ansicht und Draufsicht,

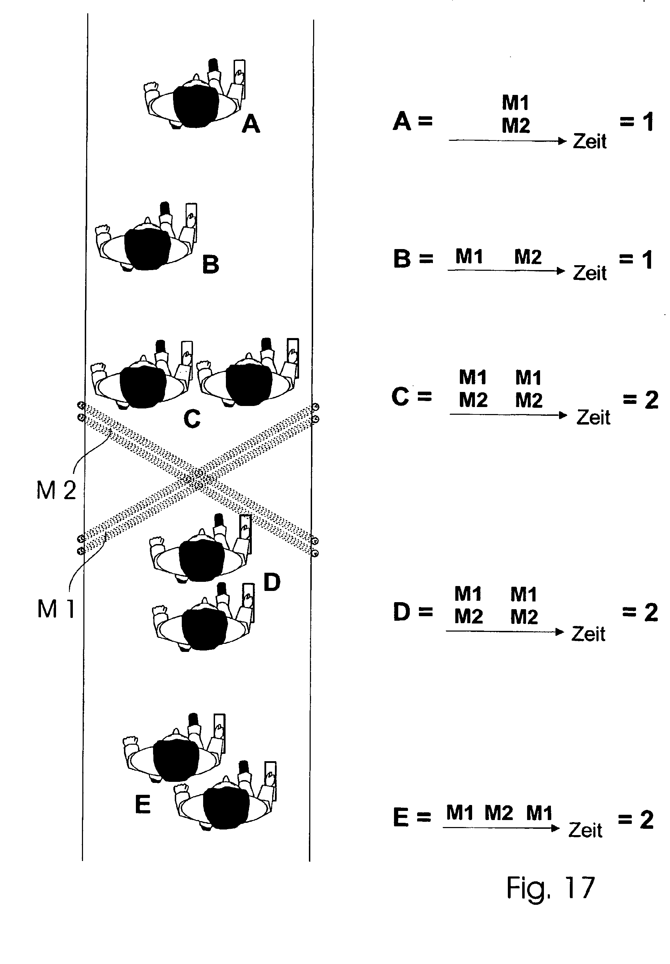

- Fig. 17: den Durchgang verschiedener Personen bzw. Personengruppen durch eine Personenvereinzelung nach den Fig. 15, 16 und die daraus abgeleiteten Ergebnisse,

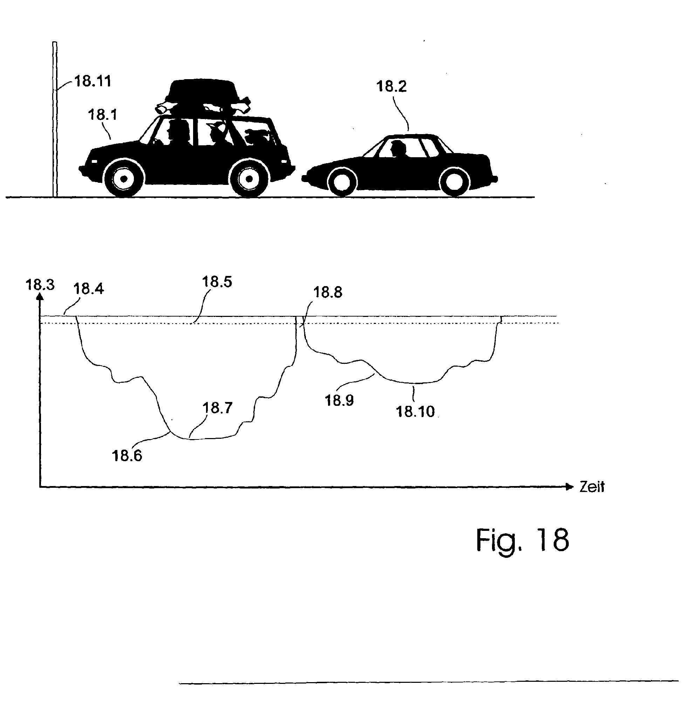

- Fig. 18: ein Beispiel für die Überwachung einer Fahrzeugschranke.

Die Figuren zeigen eine Kontrolleinrichtung eines zu überwachenden Raums auf den Zugang wenigstens eines Körpers 1.4 über einen Zugangsbereich 1.1. Derartige Zugänge können beliebig ausgestaltet sein und es muss dabei nicht nur um den Zugang von Personen gehen. So ist z. B. auch die Überwachung von Gegenständen beispielsweise im Ausführungsbeispiel der Figur 18 von Fahrzeugen möglich. Ebenfalls kann ein Bereich darauf überwacht werden, ob etwas in den Bereich hineinragt bzw. ob etwas in einen Bereich eingreifen will. Denkbare Einsatzgebiete sind z. B. die Überwachung von Maschinen auf unerlaubten Zugriff oder Eingriff z.B. zum Arbeitsschutz oder Unfallschutz und dergleichen. Grundsätzlich geht es also um die Überwachung eines beliebigen Zugangsbereichs zu einem beliebigen Raum.

Die Kontrolleinrichtung für den Zugangsbereich ist mit wenigstens einem Lichtstrahlung in den Zugangsbereich aussendenden Sendelement und wenigstens einem die Lichtstrahlung empfangenden Empfangselement ausgestattet. Im Ausführungsbeispiel werden hierfür eine Sende-LED 2.1 und eine Photodiode 6.8 als Empfänger verwendet, die bedarfsweise noch um einen Kompensations-LED 5.6 ergänzt sind, grundsätzlich können jedoch auch mehrere Sendeelemente und Empfangselemente vorgesehen werden. Zur Erzielung der gewünschten Überwachungsleistung sind Lichtfeld erzeugende Mittel vorgesehen, die die in den Zugangsbereich 1.1 ausgesandte Lichtstrahlung als ein flächiges Lichtfeld 4.3, 6.13 aufbauen. Diese Lichtfeld erzeugenden Mittel sind vorzugsweise so an einem Lichtleiterelement angeordnet, dass die ausgestrahlte Lichtstrahlung zumindest teilweise mit einer im Hinblick auf den Lichtleiter axialen und radialen Komponente abgestrahlt wird. Dieses Prinzip wird im Folgenden anhand mehrerer Ausführungsbeispiele näher erläutert.

Fig. 1 zeigt eine einfache Durchgangsüberwachung in einer beliebigen Wand ohne Richtungserkennung. Auf beiden Seiten des Zugangsbereiches 1.1 ist jeweils wenigstens ein Lichtleiterelement 1.2 und 1.3 mit wenigstens einem einzigen Sendeelement, z.B. einer Leuchtdiode, zur Abstrahlung in den Zugangsbereich und wenigstens einem Empfängerelement, z.B. einer Photodiode, zum Empfang des ausgesandten Lichtes angebracht. Bedarfsweise kann von jedem der vorgenannten Elemente nur ein einziges verwendet werden. Dazu wird das Licht vom Lichtleiterelement 1.2 ungefähr in Richtung des zweiten Lichtleiterelementes 1.3 ausgesendet und von diesem empfangen. Als Licht kann jede modulierte Lichtleistung beliebiger Wellenlänge verwendet werden, z.B. nicht sichtbares IR-Licht mit der Wellenlänge von 880 nm. Die Modulationsfrequenz kann beliebig gewählt werden, wird aber zur Richtungserkennung schnell bewegter Objekte möglichst hoch, z.B. 300 KHz, gewählt.

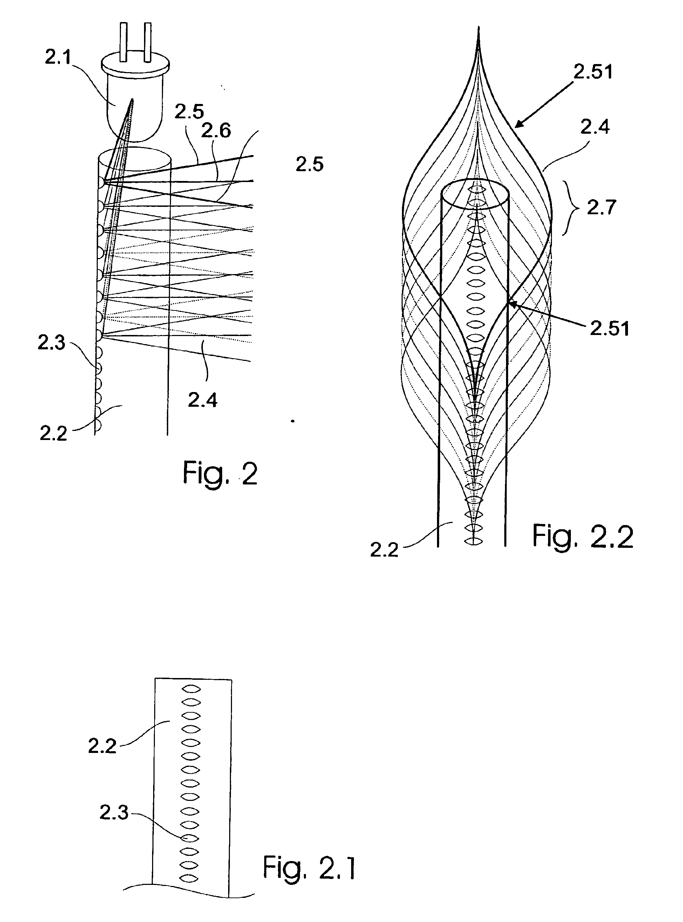

Zur Überwachung des Zugangsbereiches 1.1 wird mittels der Lichtleiterelemente 1.2 und 1.3 ein kontinuierliches Lichtfeld erzeugt. Fig. 2 zeigt die Anordnung der Lichtleiterelemente. Zur Erzeugung des Lichtfeldes wird vorzugsweise das Licht einer Leuchtdiode 2.1 in einen Sendelichtleiter 2.2 geschickt. Dieser kann z.B. ein runder Plexiglasstab sein. Auf einer Seite des Lichtleiters befindet sich eine reflektive Struktur 2.3, die das eingestrahlte Licht vorzugsweise in Richtung des Empfangselementes auf der anderen Seite des Durchganges streut. Die reflektive Struktur wird als eine Struktur z.B. durch Lasern; Spritzgießen oder Fräsen in die Oberfläche gemäß Fig.2.1 eingebracht. Die reflektive Struktur ist vorzugsweise eine gelaserte Struktur aus kleinen gelaserten Punkten mit gerundeten Einbuchtungen, die Licht in allen Richtungen abstrahlt. Das Licht wird damit in Längsrichtung des Lichtleiters gebrochen. Das abgestrahlte Licht 2.4 der Laserstrukturen überlappt sich so, dass es wie ein Lichtband wirkt. In Fig. 2.2 ist dies von der Empfängerseite aus gesehen.

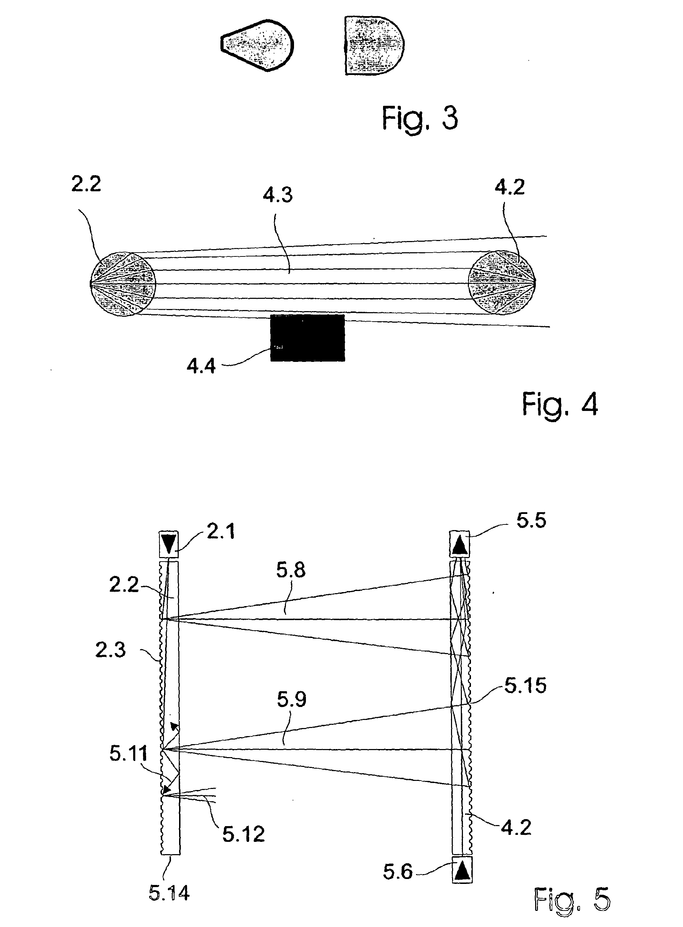

Bei einem runden Lichtleiter wird die Abstrahlung senkrecht aus dem Lichtleiter heraus nicht perfekt auf den Empfängerlichtleiter fokussiert. Der optimale Fokuspunkt liegt bei einem runden Plexiglasstab außerhalb des Durchmessers. Dies ist jedoch vorteilhaft, um Fertigungstolleranzen zu begegnen. Im Bereich des senkrechten Lichtaustrittes 2.6 werden die Lichtstrahlen zum Empfangslichtleiter hin aufgeweitet. Dies ist in Fig. 2.2 durch den Lichtbereich 2.7 angedeutet. Schräg abgestrahlte Lichtstrahlen 2.5 werden dagegen in einem begrenzten Bereich 2.51 relativ perfekt auf den Empfangslichtleiter fokussiert. Der Lichtleiter muss nicht unbedingt eine runde Form haben. Fig. 3 zeigt Beispiele für weitere mögliche Formen.

Um ein gleichmäßiges Lichtfeld zu erzeugen, können Teile der reflektiven Struktur 2.3 in der Nähe des Sendeelements weniger dicht angeordnet sein als in einem mehr vom Sendeelement entfernten Bereich des Lichtleiterelements. In der Nähe des Sendeelements besteht eine höhere Leuchtdichte, so dass dort mehr Licht an der reflektiven Struktur nach außen gebrochen wird. Erhöht man mit zunehmendem Abstand vom Sendeelement graduell die reflektive Struktur, z.B. auch nur die Stärke eines die reflektive Struktur bildenden Strichs, kann das dort noch ankommende Licht vermehrt nach außen gebrochen werden.

Fig. 4 zeigt den Strahlengang 4.3 zwischen einem Sendelichtleiter 2.2 und einem Empfangslichtleiter 4.2 von oben, die im Ausführungsbeispiel identisch aufgebaut sind. Da es sich nicht um von einander unterscheidbare Lichtbündel oder Lichtstrecken handelt, kann man auch von einem homogenen Lichtfeld 4.3 sprechen. Ein Gegenstand 4.4, der in die Nähe des Strahlenganges gebracht wird, beeinflusst diesen nicht, solange er nicht unmittelbar in den direkten Strahlengang zwischen Sender und Empfänger eintaucht.

Fig. 5 zeigt den Strahlengang zwischen dem Sendelichtleiter 2.2 und dem Empfangslichtleiter 4.2. von vorne. Das modulierte Licht der Sende-LED 2.1 wird an der reflektiven Struktur 2.3 im Lichtleiter so gestreut, das ein Lichtanteil 5.8 und 5.9 der Strahlung in Richtung Empfangslichtleiter 4.2 ausgesandt wird. Die reflektive Struktur des Lichtleiters ist so ausgebildet, das an allen Positionen, z. B. 5.8 und 5.9 vorzugsweise die gleiche Lichtleistung ausgesandt wird. Im einfachsten Fall kann der benötigte Lichtgradient über den Abstand der reflektiven Strukturen 2.3 zueinander (Fig. 2, 2.3) erreicht werden. Lichtanteile 5.11, die innerhalb des Totalreflektionswinkels in den Lichtleiter gestreut werden, verbleiben so lange in diesem, bis sie an einer anderen beliebigen Stelle auf die reflektive Struktur 2.3 treffen und erneut gestreut werden. Auch diese gestreuten Lichtanteile 5.12 tragen zum Lichtgradienten des Sendelichtleiters 2.2 bei. Wird das Ende 5.14 des Lichtleiters verspiegelt, kann das am Ende auftreffende Licht zurückgeworfen und weiter genutzt werden. Auch kann hier eine weitere LED, die mit der Sende-LED 2.1 vorzugsweise im Gleichtakt sendet, Licht einstrahlen.

Der Empfangslichtleiter 4.2 empfängt das vom Sendelichtleiter 2.2 ausgesandte Licht. Das auftreffende Licht wird auf die reflektive Struktur 5.15 fokussiert und von dort diffus mindestens teilweise zur Photodiode 5.5 geleitet. Zur Kompensation des empfangenen modulierten Lichtsignals zu Null kann auch eine weitere LED 5.6 vorgesehen sein. Dieses Prinzip ist aus der älteren deutschen Patentanmeldung DE 102 56 429.9 bekannt. Dadurch kann eine extrem hohe Empfindlichkeit ohne störende Fremdlichteinflüsse und Alterungserscheinungen erreicht werden.

Vorteilhaft ist auch eine teilweise Verspiegelung des Lichtleiters an der Einkoppelstelle der weiteren LED 5.6, um einen ungewollten Lichtaustritt aus dem Lichtleiter an dieser Stelle zu verhindern. Dabei sollte jedoch zumindest ein Teil der Lichtleistung der weiteren LED in den Empfangslichtleiter 2.2 eingekoppelt werden können.

Mit einem solchen System kann man zwar feststellen, ob eine Person oder ein Gegenstand den Bereich zwischen den Lichtleitern beeinflusst, jedoch kann nicht die Richtung festgestellt werden, aus der die Person oder der Gegenstand in das Lichtfeld 4.3 eintauchte. Oft ist es jedoch wünschenswert, die Bewegungsrichtung der Person oder des Gegenstandes zu bestimmen. Dieses kann z.B. sinnvoll sein, wenn durch einen Durchgang oder Türbereich eine Person in einer Richtung aus einem gesicherten Bereich herausgehen kann, aber keine Person in umgekehrter Richtung den gesicherten Bereich unbemerkt betreten darf. Auch kann in diesem Fall kein Gegenstand unbemerkt in den gesicherten Bereich hereingereicht werden.

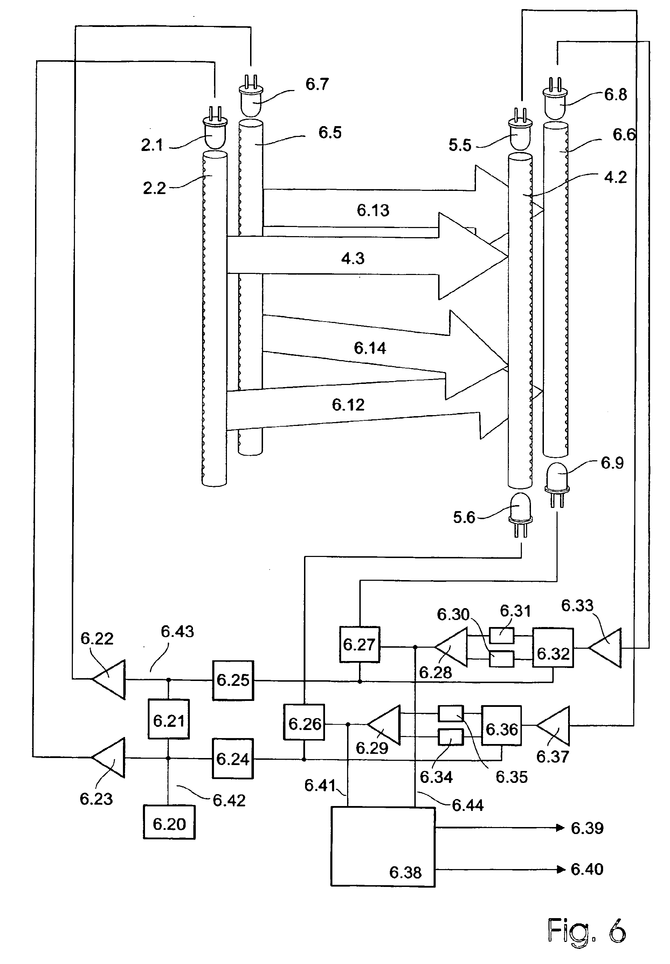

In Fig. 6 ist eine mechanische Anordnung von zwei Lichtleitersystemen zur Richtungsdetektion dargestellt. Sendelichtleiter 2.2 und Empfangslichtleiter 4.2 zusammen mit der Sende-LED 2.1 und der Photodiode 5.5 bilden eine erstes Lichtfeld 4.3. Zur Kompensation des Empfangssignals zu Null kann eine weitere LED 5.6 vorgesehen sein. Lichtleiterelement 6.5 und 6.6 zusammen mit der LED 6.7 und der Photodiode 6.8 bilden eine zweites Lichtfeld 6.13. Eine weitere LED 6.9 kann zur Kompensation des Empfangssignals zu Null vorgesehen werden.

Die Licht aussendenden Lichtleiter müssen nicht zwangsläufig auf der gleichen Seite angeordnet sein. So ist es auch möglich, das Lichtleiter 6.5 sendet und der Lichtleiter 6.6 das ausgesandte Licht empfängt, während der Sendelichtleiter 2.2 in diesem Fall dann als Empfangslichtleiter das vom Empfangslichtleiter 4.2 dann als Sendelichtleiter ausgesandte Licht empfängt. In diesem Fall muss natürlich auch die Funktion der Sende-LED 2.1 dem Empfangslichtleiter 4.2 sowie die Funktion der Photodiode 5.5 und der weiteren LED 5.6 zur Kompensation dem vorherigen Sendelichtleiter 2.2 zugeordnet werden.

Der Abstand zwischen den benachbarten Lichtleitern z. B. Sendelichtleiter 2.2 und Lichtleiter 6.5 kann z. B. einige Millimeter, aber auch bis zu einigen Zentimetern betragen. Aus mechanischen Toleranzgründen kann nicht ausgeschlossen werden, das im Beispiel der Fig. 6 gesendetes Licht 6.12 des Sendelichtleiters 2.2 auch auf den empfangenden Lichtleiter 6.6 trifft. Im Gegenzug kann auch gesendetes Licht 6.14 des Lichtleiters 6.5 auf den Empfangslichtleiter 4.2 treffen. Bei großem Abstand des Sendelichtleiters 2.2 und des Lichtleiters 6.5 zu Empfangslichtleiter 4.2 und Lichtleiter 6.6, empfangen letztere möglicherweise beide jeweils nahezu gleich viel Licht von den beiden sendenden Lichtleitern. Dies kann zu ungewollten Störungen führen. Eine sequentielle Messung der beiden Lichtfelder ist selbstverständlich möglich, empfiehlt sich aber nur beschränkt. Bei schnell bewegten Objekten, z.B. wenn ein Gegenstand durch das Lichtfeld geworfen wird, könnte bei einer sequentiellen Messung die Richtung unter Umständen nicht fehlerfrei ermittelt werden.

In Fig. 6 wird eine Signalverarbeitung beschrieben, bei der zwei unabhängige Lichtfelder störungsfrei mechanisch nebeneinander und elektrisch parallel betrieben werden können.

Wie eingangs erläutert ist es aus der WO 03/030363 A1 eine Anordnung von wenigstens zwei Leuchtdioden bekannt, die wechselseitig auf einen Photoempfänger einwirken. Das in der Amplitude wenigstens einer Lichtstrecke geregelte Licht wirkt zusammen mit dem Licht einer weiteren Lichtquelle so auf den Photoempfänger ein, das ein Empfangssignal ohne taktsynchrone Signalanteile entsteht. Das Empfangssignal des Photoempfängers wird einem Synchrondemodulator zugeführt, der das Empfangssignal wiederum in die beiden Signalkomponenten entsprechend den Lichtquellen zerlegt. Beide Signalkomponenten werden nach Tiefpassfilterung in einem Vergleicher miteinander verglichen. Treten Signalunterschiede auf, werden diese mittels Leistungsregelung wenigstens einer der Lichtquellen zu Null ausgeregelt. Das gleiche Konzept kann auch in der Lichtleiteranordnung zur Durchgangskontrolle angewandt werden.

Im Ausführungsbeispiel liefert ein Taktgenerator 6.20 ein erstes Taktsignal mit einer Frequenz von z.B. 200 KHz. Die Treiberstufe 6.23 steuert die Sende-LED 2.1 mit diesem Signal an. Das Licht der Sende-LED 2.1 wird über den Sendelichtleiter 2.2, der Lichtstrecke 4.3 im Lichtfeld und den Empfangslichtleiter 4.2 der Photodiode 5.5 zugeführt. Zur Kompensation des Taktanteiles in der Photodiode zu Null sendet eine weitere LED 5.6 ein in der Invertierungsstufe 6.24 invertiertes und in der Leistungsregelstufe 6.26 geregeltes Signal z.B. durch den Empfangslichtleiter 4.2 direkt zur Photodiode 5.5.

Der Verstärker 6.37 verstärkt das Signal der Photodiode 5.5 entsprechend und führt es dem Synchrondemodulator 6.36 zu. Dieser bekommt im Ausführungsbeispiel als Demodulationstakt das gleiche Taktsignal wie die Sende-LED 2.1. Am Ausgang des Synchrondemodulators stehen getrennt die beiden Signalkomponenten entsprechend den beiden Lichtquellen Sende-LED 2.1 und weitere LED 5.6 (Kompensation) an. Beide Signalkomponenten werden nach Tiefpassfilterung in den Filterstufen 6.34 und 6.35 im Vergleicher 6.29 miteinander verglichen. Treten Signalunterschiede in den Taktabschnitten für Sende-LED 2.1 und weitere LED 5.6 auf, werden diese mittels Leistungsregelung der Kompensationslichtquelle, hier in Form der weiteren LED 5.6 in der Leistungsregelstufe 6.26 zu Null ausgeregelt. Die Regelgröße 6.41 für die Leistungsregelstufe 6.26 wird der Auswerteeinheit 6.38 zugeführt.

Mit dieser Anordnung kann nur das Eintauchen, bzw. die Anwesenheit einer Person oder eines Gegenstandes im Bereich des Lichtfeldes zwischen Sendelichtleiter 2.2 und Empfangslichtleiter 4.2 erkannt werden. Zur Realisierung des zweiten Lichtfeldes wird nun das erste Taktsignal 6.42 in ein zweites Taktsignal 6.43 umgewandelt. Dazu reicht im einfachsten Fall ein Teiler mit einem Teilerverhältnis von 1 : 2 aus. Auch kann das zweite Taktsignal 6.43 durch Phasenverschiebung um 90 Grad aus dem ersten Taktsignal 6.42 gewonnen werden. Im Übrigen kann das Taktsignal ein Rechteck- oder Sinussignal sein.

Wichtig ist dabei, dass das ausgesandte Licht des ersten Lichtfeldes 4.3 durch ein zwangsläufiges Übersprechen des gesendeten Lichtes 6.12 zum Empfangselement in Form der Photodiode 6.8 des zweiten Lichtfeldes keine Störung des zweiten Lichtfeldes 6.13 hervorrufen kann. Gleiches gilt für das Übersprechen des gesendeten Lichtes 6.14 des zweiten Lichtfeldes 6.13 in das erste Lichtfeld 4.3.

Äquivalent der Signalverarbeitung des ersten Lichtfeldes 4.3 erfolgt die Signalverarbeitung des zweiten Lichtfeldes 6.13. Das erste Taktsignal 6.42 wird im Teiler 6.21 von z.B. 200 KHz auf 100 KHz heruntergeteilt. Die Treiberstufe 6.22 steuert die LED 6.7 mit diesem Signal an.

Das Licht der LED 6.7 wird über den Lichtleiter 6.5, der Lichtstrecke 6.13 im Lichtfeld und den Lichtleiter 6.6 der Photodiode 6.8 zugeführt. Zur Kompensation des Taktanteiles in der Photodiode zu Null sendet eine zweite LED 6.9 ein in der Invertierungsstufe 6.25 invertiertes und in der Leistungsregelstufe 6.27 geregeltes Signal durch den Lichtleiter 6.6 direkt zur Photodiode 6.8.

Der Verstärker 6.33 verstärkt das Signal der Photodiode 6.8 entsprechend und führt es dem Synchrondemodulator 6.32 zu. Dieser bekommt im Ausführungsbeispiel als Demodulationstakt das gleiche Taktsignal wie die sendende LED 6.7. Am Ausgang des Synchrondemodulators stehen getrennt die beiden Signalkomponenten entsprechend den beiden Lichtquellen LED 6.7 und zweite LED 6.9 (Kompensation) an. Beide Signalkomponenten werden nach Tiefpassfilterung in den Filterstufen 6.31 und 6.30 im Vergleicher 6.28 miteinander verglichen. Treten Signalunterschiede in den Taktabschnitten für LED 6.7 und zweite LED 6.9 auf, werden diese mittels Leistungsregelung der Kompensationslichtquelle, hier in Form der zweiten LED 6.9 in der Leistungsregelstufe 6.27 zu Null ausgeregelt. Die Regelgröße 6.44 für die Leistungsregelstufe 6.27 wird der Auswerteeinheit 6.38 zugeführt.

Durch die Verdoppelung, bzw. Halbierung der Taktfrequenz für das zweite Lichtfeld 6.13 kann die Sendeleistung des zweiten Lichtfeldes auf Grund der Synchron-Demodulation keinen Einfluss auf das erste Lichtfeld 4.3 ausüben. Das gleiche gilt selbstverständlich auch im umgekehrten Fall.

Diese Anordnung hat zudem insgesamt den Vorteil, dass sie für Fremdlicht äußerst unempfindlich ist. Dadurch ist es möglich, die Lichtleiter z.B. mittels der Sende-LED zugleich als Beleuchtungsmittel zu verwenden, insbesondere wenn die Taktfrequenz eine für das menschliche Auge nicht mehr wahrnehmbare Frequenz ist, oder Licht über eine weitere vorzugsweise ungetaktete Lichtquelle in den Lichtleiter einzubringen.

Fig. 7 zeigt den Signalverlauf der Regelgrößen 6.44 und 6.41 bei Bewegung z. B. einer Person 7.8 und eines kleinen Gegenstandes 7.5 durch das Lichtfeld 4.3 und 6.13. Auf der Ordinate ist die Gesamtlichtleistung 7.1, die zwischen Sendelichtleiter 2.2 und Empfangslichtleiter 4.2, bzw. zwischen den Lichtleitern 6.5 und 6.6 wirksam ist, aufgetragen.

Die Person trifft zuerst auf ein erstes Lichtfeld und unterbricht dieses partiell. Dadurch nimmt die Lichtleistung im Empfänger des entsprechenden Lichtfeldes ab. Dies zeigt der Signalverlauf für die im Lichtfeld übertragene Lichtleistung, repräsentiert als Signalverlauf 7.3. Kurze Zeit später trifft die Person auf das zweite Lichtfeld und unterbricht auch dieses partiell (7.4). Die Zeit zwischen dem Eintauchen der Person in die Lichtfelder hängt vom Abstand der Lichtfelder und der Bewegungsgeschwindigkeit der Person ab. Sie beträgt in der Regel einige Millisekunden. Man kann daher bedarfsweise mit Hilfe des Zeitunterschiedes auch die Geschwindigkeit der Person ermitteln.

Bezeichnend für die beschriebene Erfindung ist eine hohe, ggf. nahezu 100 %ige Identität der Signalverläufe 7.4 und 7.3 bei Bewegung einer Person oder eines Gegenstandes durch die Lichtfelder 4.3 und 6.13. Dies ist besonders wichtig, wenn zuerst ein kleiner Teil des Körpers, z.B. ein ausgestreckter Finger in die Lichtfelder eintaucht. Bei der Verwendung einzelner Lichtschranken in herkömmlichen Systemen könnte ein kleiner, schräg bewegter Gegenstand, zum Beispiel ein Finger, möglicherweise an der ersten, vorderen Lichtschranke "ungesehen" vorbei die dahinter liegende zweite Lichtschranke treffen. Dadurch ist in einem solchem Lichtschranken-System die Richtungserkennung nur unzureichend. Bei nahezu 100 % iger Identität der Signalverläufe 7.4 und 7.3. im hier beschriebenem System kann jedoch auch bei Eintauchen mit einem kleinen Gegenstand an beliebiger Stelle in jedem Fall eine fehlerfreie Richtungserkennung erreicht werden.

Dazu wird ein Schwellwert 7.6 in die Nähe des Ruhewertes 7.2 gelegt. Der Ruhewert 7.2 entspricht dem Wert der Regelgrößen 6.41 und 6.44 in Fig. 6, ohne dass eine Person oder ein Gegenstand die Lichtfelder 4.3 und 6.13 in Fig. 6 beeinflusst. Kommt es zu einer Beeinflussung der Lichtfelder durch eine Person (7.8) oder durch einen Gegenstand - die Signalverläufe 7.5 zeigen die Reaktion bei Durchwurf eines kleinen Balls durch die Lichtfelder - unterschreitet entsprechend der Anordnung der Lichtfelder ein erster der beiden Werte der Signalverläufe kurz vor dem zweiten Wert den Schwellwert 7.6. Der Schwellwert ist vorgegeben oder vorgebbar. Es kann sich um einen festen Schwellwert handeln, vorzugsweise wird er jedoch je nach Einsatzzweck auch in Abhängigkeit der Umgebungsbedingungen dynamisch, also zeitabhängig gesteuert.

In Fig. 8 ist dieser Vorgang etwas deutlicher dargestellt. Vier Lichtleiter bilden ein erstes Lichtfeld 4.3 und ein zweites Lichtfeld 6.13. Ein Gegenstand, im Beispiel 8.10 ein Würfel 8.3, wird von vorne durch die Lichtfelder geworfen. Zuerst wird das Lichtfeld 4.3 beeinflusst, kurze Zeit später das Lichtfeld 6.13. Entsprechend spiegelt sich dieser Vorgang im Signalverlauf der Regelgrößen 6.41 und 6.44 als Kurve 8.4 und 8.5 wieder. Beide Signalverläufe unterschreiten in bestimmter Reihenfolge den Schwellwert 7.6 und führen nach Digitalisierung zu den digitalen Signalen 8.6 und 8.7. Diese zeigen einen entsprechenden Versatz, der nach einer Auswertung zu einem Richtungssignal 8.8 für Vorwärts führt. Im zweiten Beispiel 8.11 wird der Würfel von hinten durch die Lichtfelder geworfen, die Signalverläufe 8.4 und 8.5 bzw. 8.6 und 8.7 vertauschen ihre Position und es entsteht ein Richtungssignal 8.9 für Rückwärts.

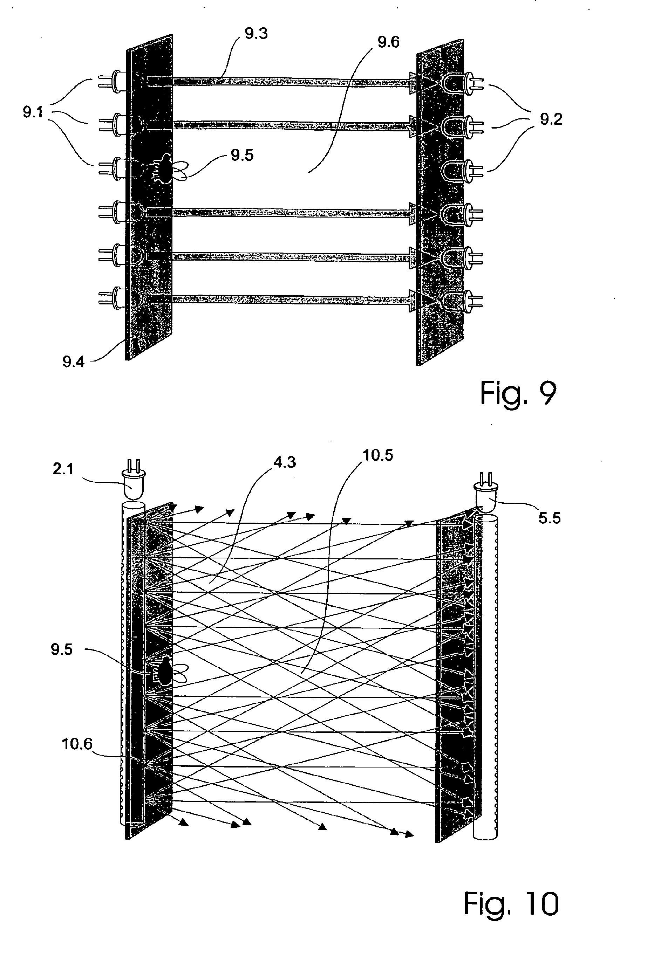

Für eine Durchgangskontrolle ist es oftmals wichtig nicht nur Personen zu erkennen sondern auch Gegenstände, wenn z. B. eine Person unerwünscht einen kleinen Gegenstand wie z. B. eine unbezahlte Ware an irgendeiner beliebigen Stelle des Zugangsbereiches durchreicht oder durchwirft. In herkömmlichen Systemen nach Fig. 9 kann es dabei leicht zu Störungen durch Insekten oder Verschmutzungen kommen. Diese Systeme sind in der Regel aus einer Reihe von Leuchtdioden 9.1 und einer Reihe von Photodioden 9.2 als einzelne Lichtschranken 9.3 aufgebaut. Oftmals sind zur genaueren Fokussierung noch Linsensysteme vor Sender und Empfänger vorgesehen. Sender und Empfänger können auch hinter einer für die verwendete Wellenlänge translucenten Oberfläche 9.4 angebracht sein.

Ein Problem tritt auf, wenn ein Insekt 9.5 auf dieser Oberfläche krabbelt und den Lichtstrahl unterbricht. Dieses kann zu einem Fehlalarm führen. Befindet sich an Stelle des Insektes eine Verschmutzung auf der Oberfläche, so könnte ein intelligentes Auswertesystem diese Unterbrechung oder Abschwächung des Lichtstrahles zwar nach einer gegebenen Zeit ignorieren, jedoch entsteht dann hinter dem Insekt oder der Verschmutzung ein nicht sensitiver Bereich 9.6 im zu überwachenden Zugangsbereich. In diesem nicht sensitiven Bereich könnte nun ein Gegenstand unbemerkt durchgereicht werden.

Dieser Missstand wird nun dadurch vermieden, dass anstelle der wenigen Einzellichtschranken 9.3 das Licht der Leuchtdiode 2.1 gleichmäßig in einem Lichtfeld 4.3 ausgesandt wird und als ganzes von der Photodiode 5.5 empfangen wird. Ein Insekt 9.5 schattet dieses Lichtfeld nur durch sein Abschattungsvolumen ab, d.h. im Verhältnis zur Gesamtfläche nur sehr wenig. Gleichgültig, an welcher Stelle das Insekt in das Lichtfeld eintaucht, wird es den Wert der Regelgröße 6.41 bzw. 6.44 (Fig. 6) nur gering verändern. Durch eine entsprechende Wahl des Schwellwertes 7.6 (Fig. 7) wird ein Insekt an beliebiger Stelle des Lichtfeldes 4.3. bzw. 6.13 daher nicht zu einem Fehlalarm führen.

Vorteilhaft ist auch die in Längsachse diffuse Abstrahlung aller Reflektionsstellen im Lichtleiter. In Fig. 10 sind nur einige dargestellt, in einem Lichtleiter mit gelaserter Reflektionsstruktur können es bis zu mehrere tausend sein. Bei Verwendung eines weißen Streifens als Reflektionselement kann die Anzahl der Reflektionsstellen als nahezu unendlich angesehen werden. Dadurch strahlen Reflexionsstellen oberhalb und unterhalb des Insektes bzw. der Verschmutzung 9.5 (Fig.10) weiterhin quer am Insekt vorbei und füllen den Bereich hinter dieser Störstelle weiterhin mit Licht aus. Es entsteht somit kein bzw. allenfalls ein sehr kleiner nicht sensitiver Bereich im Lichtfeld 4.3.

Durchschreitet eine einzelne Person das Lichtfeld, wird die maximale Abschattung erreicht, wenn der Kopf als höchste Stelle der Person das Lichtfeld beeinflusst und gleichzeitig ein oder beide Beine sich im Lichtfeld befinden. Steht die Person zufällig so, das sich ein Bein wenigstens zum Teil vor, und ein Bein hinter dem Lichtfeld befindet, verringert sich die Abschattung und es könnte zu einer Fehlinterpretation der Personenzahlerkennung kommen. Dies lässt sich verhindern, wenn das bzw. die Lichtfelder, wie in Fig. 11 gezeigt, in zwei unabhängige Bereiche aufgeteilt wird bzw. werden. Der untere Bereich mit den Sende-Lichtleiterpaar 11.5 und den Empfangs-Lichtleiterpaar 11.7 bildet das Lichtfelderpaar 11.6. Sie reichen z.B. ca. 100 cm hoch und decken den Fuß / Beinbereich einer durchschreitenden Person 11.1 ab. Der obere Bereich, gebildet aus dem Sendelichtleiterpaar 11.2 und dem Empfangslichtleiterpaar 11.4 bildet ein Lichtfelderpaar 11.3, mit denen der Bereich oberhalb der 100 cm bis zur Durchgangsobergrenze abgedeckt wird. Mit dieser Anordnung wird der Fuß- und Oberkörperbereich getrennt erfasst. Zur Alarmgebung werden beide Bereiche genutzt, zur Vereinzelung im Wesentlichen nur der obere Bereich.

Fig. 12 gibt die Lichtabschattung durch einen Oberkörper im Lichtfelderpaar 11.3 in den Signalverläufe 12.1 und 12.2 entsprechend den Regelgrößen 6.41 und 6.44 wieder. Bei Durchgang des höchsten Körperbereiches, im Beispielfall des Kopfes der Person durch das Lichtfelderpaar 11.3, ergibt sich ein eindeutiges Minimum 12.3 der Signale 12.1 und 12.2. Fig. 13 zeigt dazu die Lichtabschattung der Beine und des Unterkörpers in dem unterem Lichtfelderpaar 11.6. Bei Durchschreiten des unteren Lichtfelderpaars 11.6 kann es zu einem Bereich totaler Abschattung 13.4 der Lichtfelder 11.6 kommen, wenn ein Fuß im Bereich des Lichtfeldes auf den Boden gesetzt wird, während es bei einer Bewegung mit erhobenem Fuß zu einer Teilabschattung 13.5 kommen wird, da unter dem erhobenem Fuß noch Licht durchdringt. Im Bereich zwischen den Beinen wird weniger Licht abgeschattet, so das eine Signalerhöhung 13.3. stattfindet. Da die Gehgewohnheiten einer Person nicht vorhersehbar sind, kann aus den Signalverläufen im unteren Lichtfeldpaar 11.6 nicht auf die Personenzahl geschlossen werden. Jedoch besteht bei Durchgang einer einzigen Person durch die Lichtfelderpaare 11.3 und 11.6 eine zeitliche Korrelation zwischen dem Unterschreiten der Schwellwerte 7.6.

Versucht jetzt ein Hund oder eine zweite Person unbemerkt in den zu überwachenden Bereich einzudringen, indem sie sich in geduckter Haltung neben der ersten Person nur durch die Lichtfelder 11.6 bewegt, so verletzt er oder sie gemäß Fig. 13a die zeitliche Korrelation 13.8 zwischen den Unterschreitungen bzw. Überschreitungen der Schwellwerte 7.6. in den beiden Signalverläufen für die Lichtfeldpaare 11.3 und 11.6. Der Signalverlauf 12.3 im Lichtfeldpaar 11.3 zeigt den Durchgang des Oberkörpers einer ersten Person. Zum Zeitpunkt 13.8 hat diese erste Person das Lichtfeld 11.3 verlassen, der Schwellwert 7.6 wird wieder überschritten und das Signal nimmt den Ruhewert 7.2 ein. Ungefähr zu diesem Zeitpunkt sollte jetzt auch der Signalverlauf für das Lichtfeld 11.6 den Schwellwert 7.6 wieder überschreiten. Fig. 13 a zeigt jedoch, das der Schwellwert 7.6 erst nach einem weiteren Zeitverlauf 13.7 den Schwellwert 7.6 überschreitet. Aus diesem Umstand kann nun geschlossen werden, das sich ein Hund oder eine zweite Person kriechend hinter der ersten Person durch die Durchgangskontrolle unbemerkt einschleichen wollte. In diesem Fall kann z.B. eine Kamera eingeschaltet oder ein Alarm ausgelöst werden. Dies kann durch Erkennungsmittel und Vergleichsmittel, wie sie insbesondere in Fig. 6 beispielhaft erläutert sind, für jedes Lichtfeld bedarfsweise gesondert festgestellt werden.

Unter Umständen ist es wichtig, das der Übergangsbereich zwischen den Lichtfeldpaaren 11.3 und 11.6 keinen unempfindlichen Übergangsbereich aufweist. Dies kann gemäß Fig. 14 dadurch erreicht werden, das die Lichtleiter, hier am Beispiel zweier Lichtleiter 14.1 und 14.2 dargestellt, z.B. eine reflektive Fläche 14.4 aufweisen, so das die Leuchtdioden 14.3 hinter den Lichtleitern angebracht werden können. Oder die Lichtleiter 14.1 und 14.2 werden nebeneinander, ohne Abstand in Längsrichtung, angeordnet (14.5).

Mit der bisher beschriebenen Anordnung können Personen oder Gegenstände detektiert werden, die das Lichtfeld passieren. Dabei kann stufenlos die Größe der Abschattung und die Richtung der Bewegung gemessen werden. Weiterhin kann auch die Geschwindigkeit der Bewegung gemessen werden und über Messung der zeitlichen Länge der Abschattung im Verhältnis zur Geschwindigkeit indirekt auf die Größe des Gegenstandes bzw. den Umfang der Person geschlossen werden. Dies ist wichtig, um z.B. eine Person oder einen Gegenstand zu erkennen, die z.B. unter dem Mantel einer zweiten Person "versteckt" mitgeführt werden und die gemeinsam nur ein einziges Maximum 12.3 der Abschattung bilden.

In vielen Fällen will man wissen, ob nur eine einzelne Person durch das Lichtfeldpaar geht, oder zwei Personen, die z.B. Schulter an Schulter nebeneinander durch das Lichtfeldpaar gehen. Drehkreuze sollen nur immer eine einzelne Person durchlassen. Dabei kann aber nicht ausgeschlossen werden, dass sich eine zweite Person unerlaubt mit hindurchzwängt. Ziel ist es nun, z. B. nach einem solchen Drehkreuz zu erkennen, ob sich mehr als eine Person hindurchbewegt hat.

Auch muss möglicherweise erkannt werden, ob die zu detektierende Person auf dem Weg umkehrt und sich somit unerlaubterweise in die falsche Richtung bewegt. Dazu werden in der nun beschriebenen Anordnung zur Personenvereinzelung jeweils zwei benachbarte einzelne Lichtfelder eingesetzt. So kann neben der Anzahl der Personen auch deren Bewegungsrichtung erkannt werden.

Zwei Personen kann die bisher beschriebene Anordnung nur getrennt erkennen, wenn sie hintereinander gehen. Nebeneinander ergeben zwei Personen die gleiche Abschattung wie eine Einzelperson, so das hier keine Vereinzelung erfolgen kann. Zur Erfassung der Anzahl nebeneinander gehender Personen werden im Ausführungsbeispiel vorzugsweise zwei gekreuzte Lichtfelder eingesetzt. Zur Erfassung der Bewegungsrichtung besteht jedes Lichtfeld aus zwei einzelnen Lichtfeldern.

Fig. 15 zeigt die Anordnung der Lichtfelder. Zum Schutz der Lichtleiter kann eine translucente Scheibe 15.11 vor den Lichtleitern vorgesehen sein. Diese kann als durchgehende Fläche 15.12 selbstverständlich auch parallel zum Laufweg der Personen angeordnet sein und z.B. aus IR-transparenten, aber für das menschliche Auge z.B. schwarz erscheinenden Kunststoff bestehen. Dadurch bleibt das Detektionssystem für die durchschreitende Person 15.1 unsichtbar.

Im Ausführungsbeispiel sendet Lichtleiter 15.2, während Lichtleiter 15.5 das gesendete Licht empfängt, und beide Lichtleiter zusammen ein erstes Lichtfeld 16.13 bilden. Gleichzeitig sendet Lichtleiter 15.3, während Lichtleiter 15.6 das gesendete Licht empfängt, und diese beiden Lichtleiter zusammen ein zweites Lichtfeld 16.14 bilden. Die Frequenz oder Phase des ausgesandten Lichtsignals des ersten Lichtfeldes wird so gewählt, das sie das zweite Lichtfeld bzw. die entsprechende Auswerteelektronik nicht stört. Es können bei entsprechender optischer Filterung des Empfangspfades auch zwei verschiedene Wellenlängen, z.B. 740 nm und 950 nm eingesetzt werden. Dann können beide Lichtfelder mit gleicher Taktfrequenz oder gleicher Phase betrieben werden, ohne das sie sich gegenseitig stören.

Zwei weitere Lichtfelder kreuzen nun die beiden ersten Lichtfelder 16.13 und 16.14. Dazu sendet Lichtleiter 15.7, während Lichtleiter 15.9 das gesendete Licht empfängt, und diese beiden Lichtleiter zusammen ein drittes Lichtfeld 16.15 bilden. Gleichzeitig sendet Lichtleiter 15.8, während Lichtleiter 15.10 empfängt, und diese beide Lichtleiter zusammen ein viertes Lichtfeld 16.16 bilden. Bei entsprechendem Abstand der empfangenden Lichtleiter für das erste Lichtfeldpaar 16.13 und 16.14 zu den empfangenden Lichtleiter für das zweite Lichtfeldpaar 16.15 und 16.16 kann ein Übersprechen der Lichtanteile verhindert werden. Das bedeutet, das Lichtanteile des ersten Lichtfeldpaares nicht in die Empfangslichtleiter des zweiten Lichtfeldpaares eindringen. Im Ausführungsbeispiel kreuzen sich die Lichtfelder in etwa auf halber Strecke, es sind jedoch auch Ausführungen möglich, bei denen sich die Lichtfelder an anderer Stelle oder gar nicht kreuzen. Wichtig ist nur, das sie zueinander im Winkel stehen. Sie können aber auch verschieden Winkel zur Bewegungsrichtung des Körpers aufweisen. Auch können zur erhöhten Sicherheit auch noch weitere Lichtfelder angeordnet werden. Geeignet Winkel sind z.B. 80° und 100° zur Bewegungsrichtung.

Bei geringem Abstand der Empfangslichtleiter für das erste Lichtfeldpaar 16.13 und 16.14 zu den Empfangslichtleitern für das zweite Lichtfeldpaar 16.15 und 16.16 von z. B. kleiner 30 cm kann es aus Toleranzgründen zu einem Übersprechen der Lichtanteile kommen. In diesem Fall kann die Funktion der sendenden Lichtleiter mit der Funktion der empfangenden Lichtleiter für ein Lichtfeldpaar vertauscht werden. Im Ausführungsbeispiel werden dann z.B. die Lichtleiter 15.9 und 15.10 sendende Lichtleiter und die Lichtleiter 15.7 und 15.8 empfangende Lichtleiter.

Der Einfachheit halber wurde im Ausführungsbeispiel der Fig. 15 die Unterteilung für den oberen und unteren Bereich, wie in Fig. 11 dargestellt, nicht berücksichtigt. Grundsätzlich muss eine derartige Kombination auch nicht stattfinden, wenngleich sie zur Personenzahlerkennung von Vorteil ist. Die nachfolgend beschriebenen Signalverläufe gelten für den oberen Bereich, also die Detektion des Oberkörpers.

Durchschreitet die Person 15.1 in Fig. 16 die Lichtfelder von unten nach oben, trifft sie im Ausführungsbeispiel in etwa zeitgleich auf die Lichtfelder 16.16 und 16.14. und kurze Zeit später auf die Lichtfelder 16.13 und 16.15. Mit dieser Anordnung kann die Bewegungsrichtung erkannt, sowie eine Personenvereinzelung durchgeführt werden. Wird kein Wert auf die Bewegungsrichtung gelegt, reichen zwei Lichtfelder aus, im Ausführungsbeispiel Fig. 16 z.B. die Lichtfelder 16.13 und 16.15, d. h. eine Verdoppelung der Lichtfelder entfällt.

Fig. 17 zeigt den Durchgang verschiedener Personen bzw. Personengruppen durch eine solche Personenvereinzelung und die daraus abgeleiteten Ergebnisse. Der Einfachheit wegen wurden die einzelnen Lichtfeldpaare zum Lichtfeldsystem M1 beziehungsweise M2 zusammengefasst. Die Personen bzw. Personengruppen A bis E durchschreiten von unten nach oben die Lichtfeldsysteme M1 und M2. Dabei befinden sie sich in unterschiedlichen Positionen zum Lichtfeldsystem M1 / M2.

Person A geht mittig durch die Lichtfeldsysteme. Dabei beeinflusst sie M1 und M2 in etwa zeitgleich, aber jedes System M1 und M2 erkennt nur ein Maximum der Abschattung. Das Ergebnis ist "eine" Person.

Person B geht seitlich von der Mitte durch die Lichtfeldsysteme. Dabei wird zuerst M1, danach M2 beeinflusst, wieder erkennt jedes Lichtfeldsystem nur ein Maximum der Abschattung. Das Ergebnis ist "eine" Person.

Die Personen C gehen parallel durch die Lichtfeldsysteme. M1 und M2 erkennen dabei je zwei mal zeitgleich ein Maximum der Abschattung. Das Ergebnis ist "zwei" Personen.

Die Personen D gehen direkt hintereinander durch die Lichtfeldsysteme. Dabei tritt der gleiche Zustand wie bei Person A auf, jedoch zwei mal hintereinander. Die Lichtfeldsysteme M1 und M2 erkennen jeweils zwei mal ein Maximum der Abschattung. Das Ergebnis ist "zwei" Personen.

Die Personen E gehen so seitlich versetzt durch die Lichtfeldsysteme, das die links gehende Person zuerst auf das Lichffeldsystem M1 trifft und zu einem ersten Abschattungsmaximum führt. Bei weiterem Durchschreiten treffen beide Personen gleichzeitig auf das Lichtfeldsystem M2. Sie überdecken sich jedoch so, das es nur zu einem einzigen Abschattungsmaximum im Lichtfeldsystem M2 kommt. Kurze Zeit später beeinflusst jetzt aber die rechts gehende Person das Lichtfeldsystem M1, so das es zu einem zweiten Abschattungsmaximum kommt. Das Ergebnis ist "zwei" Personen.

### Daraus ergibt sich folgende Schlussfolgerung:

Wird in den Lichtfeldsystemen M1 und M2 jeweils nur eine maximale Abschattung erkannt, handelt es sich nur um eine Person, die durch die Lichtfelder an einer beliebigen Stelle geht. Erkennt mindestens eines der Lichtfeldsysteme mindestens zwei Maxima in der Abschattung muss es sich um zwei Personen handeln, die in beliebiger Stellung zueinander durch die Lichtfelder M1 und M2 gehen.

Selbstverständlich kann das System auch zur Vereinzelung von Fahrzeugen oder anderen beweglichen Gegenständen eingesetzt werden. In Fig. 18 ist ein Beispiel für die Überwachung einer Fahrzeugschranke dargestellt. Zur Überwachung einer mechanischen Fahrzeugschranke wird in der Regel eine im Boden eingelassene, mittels Induktionsspulen arbeitende Erfassung des Metallgehaltes des Fahrzeuges eingesetzt. Diese Systeme haben ein begrenztes Auflösungsvermögen. Dadurch kann es vorkommen, das zwei direkt hintereinander fahrende Fahrzeuge als ein einziges erkannt werden. Diesen Effekt können Betrüger dazu nutzen, um z.B. mit einem gestohlenen Fahrzeug 18.2 unmittelbar hinter einem regulären Fahrzeug 18.1 durch eine in Fig. 18 nicht näher dargestellte mechanische Schranke zu kommen.

Im Beispiel der Fig. 18 wird ein Lichtfeld 18.11 (von der Seite gesehen) in der Nähe der mechanischen Schranke angeordnet. An Hand der Abschattung kann jedes einzelne Fahrzeug erkannt werden. Der Wert 18.3 stellt den Signalverlauf für die Absorption im Lichtfeld 18.11 dar. Die Linie 18.4 steht für die Signalgröße ohne Abschattung. Wird der Schwellwert 18.5 unterschritten, wurde ein Fahrzeug erkannt. An Hand des Signalverlaufes 18.6 kann auch auf die Größe, bzw. Form des Fahrzeuges geschlossen werden. Der höchste Punkt des Fahrzeuges wird durch das Maximum der Abschattung 18.7 repräsentiert. Im Punkt 18.8 wurde der Schwellwert 18.5 wieder überschritten, da hier das erste Fahrzeug 18.1 zu Ende war. Kurze Zeit später beeinflusst das zweite Fahrzeug 18.2 das Lichtfeld 18.11 und erzeugt eine zweite Abschattung 18.9 mit dem Maximum 18.10. Da die zeitliche Länge der Schwellwertüberschreitung 18.8 den Abstand zwischen zwei Fahrzeuge bei einer bestimmten, im Lichtfeldsystem 18.11 gemessenen Geschwindigkeit repräsentiert, kann auf eine nicht erlaubte Durchfahrt eines zweiten Fahrzeugs geschlossen werden. Dann kann z.B. die Schranke geschlossen oder es können weitere Maßnahmen eingeleitet werden. Ein Fahrzeug mit Anhänger wird dagegen nicht als unerlaubte Durchfahrt erkannt, da zwischen Fahrzeug und Hänger eine Verbindung besteht, die im Signalverlauf 18.6 / 18.9 zwischen den beiden Maxima der Abschattung (18.7 und 18.10) nicht zu einer Überschreitung des Schwellwertes 18.5 im Zeitraum 18.8 führt.

Selbstverständlich kann als sendender Lichtleiter auch eine Gasentladungsröhre eingesetzt werden, wobei der Lichtgradient dann durch weitere geeignete Maßnahmen bestimmt wird. Darf das Licht des sendenden Lichtleiters sichtbar sein, kann als Empfänger auch ein Lichtleiter ohne weitere reflektive Struktur auf der Empfangsseite eingesetzt werden. An Stelle der reflektiven Struktur wird dem Lichtleitermaterial als ganzes z.B. ein Fluoreszenzfarbstoff zugesetzt. Dieser Farbstoff absorbiert im Lichtleiter das empfangene Licht des sendenden Lichtleiters und strahlt dieses Licht mit einer veränderten Wellenlänge isotrop ab. So abgestrahltes Licht bleibt innerhalb der Totalreflektion im Lichtleiter und wird ohne wesentliche Dämpfung zum Ende des Lichtleiters geleitet.

Bei einem Lichtleiter ohne Fluoreszenzfarbstoff, bei dem das empfangene Licht auf die reflektive Struktur gebündelt wird, kann nur ein Teil so in den Lichtleiter gestreut werden, dass er innerhalb der Totalreflektion im Lichtleiter zur Photodiode geleitet wird. Ein wesentlicher Teil des empfangenen Lichtes wird in annähernd gleicher Richtung wie die Eintrittsrichtung wieder aus dem Lichtleiter heraustreten und trifft somit nicht auf die Photodiode. Weiterhin kann das empfangene Licht auf dem Weg zur Photodiode innerhalb des Lichtleiters wieder an einer beliebigen anderen Stelle erneut auf die reflektive Struktur auftreffen und von dort zumindest teilweise aus dem Lichtleiter wieder austreten. Obwohl somit viel Licht verloren geht, kann in der Praxis mit zwei handelsüblichen Leuchtdioden und einer Photodiode und einem Lichtleiter mit 6 mm Durchmesser ein Zugangsbereich von 2 x 2 m so empfindlich überwacht werden, das ein üblicher Schreibstift mit 10 mm Durchmesser auch unter erschwerten Bedingungen (direktes Sonnenlicht, Neonröhren usw.) sicher erkannt wird. Der Einsatz eines Fluoreszenzfarbstoffes im Empfängerlichtleiter erhöht jedoch den Wirkungsgrad um das 3 - 5-fache.

Der Fluoreszenzfarbstoff setzt mit hohem Wirkungsgrad eine kürzere Wellenlänge in eine längere Wellenlänge um. Wird als Sendelicht z.B. blaues Licht eingesetzt, setzt der Fluoreszenzfarbstoff dieses in grünes Licht um. Grünes Licht als Sendelicht wird im Fluoreszenzfarbstoff in rotes Licht umgesetzt, rotes Sendelicht in Infrarotes Licht.

### Bezugszeichenliste

- 1.1: Zugangsbereich
- 1.2: Lichtleiterelement
- 1.3: Lichtleiterelement
- 1.4: Körper
- 2.1: Sende-LED
- 2.2: Sendelichtleiter
- 2.3: Reflektive Struktur
- 2.4: Abgestrahltes Licht
- 2.5: Schräg abgestrahlte Lichtstrahlen
- 2.51: Lichtstrahlenbereich
- 2.6: senkrechter Lichtaustritt
- 2.7: Lichtbereich
- 4.2: Empfangslichtleiter
- 4.3: Lichtfeld
- 4.4: Gegenstand
- 5.5: Photodiode
- 5.6: weitere LED zur Kompensation
- 5.8: Lichtanteil
- 5.9: Lichtanteil
- 5.11: Lichtanteile innerhalb des Totalreflektionswinkels
- 5.12: gestreute Lichtanteile
- 5.14: Lichtleiterende
- 5.15: reflektive Struktur
- 6.5: Lichtleiter
- 6.6: Lichtleiter
- 6.7: LED
- 6.8: Photodiode
- 6.9: zweite LED zur Kompensation
- 6.12: gesendetes Licht
- 6.13: zweites Lichtfeld
- 6.14: gesendetes Licht
- 6.20: Taktgenerator
- 6.21: Teiler
- 6.22: Treiberstufe
- 6.23: Treiberstufe
- 6.24: Invertierungsstufe
- 6.25: Invertierungsstufe
- 6.26: Leistungsregelstufe
- 6.27: Leistungsregelstufe
- 6.28: Vergleicher
- 6.29: Vergleicher
- 6.30: Filterstufe
- 6.31: Filterstufe
- 6.32: Synchrondemodulator
- 6.33: Verstärker
- 6.34: Filterstufe
- 6.35: Filterstufe
- 6.36: Synchrondemodulator
- 6.37: Verstärker
- 6.38: Auswerteeinheit
- 6.41: Regelgröße
- 6.42: erstes Taktsignal
- 6.43: zweites Taktsignal
- 6.44: Regelgröße
- 7.1: Gesamtlichtleistung
- 7.2: Ruhewert
- 7.3: Signalverlauf für übertragene Lichtleistung
- 7.4: Signalverlauf für übertragene Lichtleistung
- 7.5: kleiner bewegter Gegenstand
- 7.6: Schwellwert
- 7.8: Person in Bewegung
- 8.1: erstes Lichtfeld
- 8.2: zweites Lichtfeld
- 8.3: Gegenstand, z.B. Würfel
- 8.4: Signalverlauf
- 8.5: Signalverlauf
- 8.6: digitale Signale
- 8.7: digitale Signale
- 8.8: Richtungssignal für "Vorwärts"
- 8.9: Richtungssignal für "Rückwärts"
- 8.10: erstes Beispiel
- 8.11: zweites Beispiel
- 9.1: Reihe von Leuchtdioden
- 9.2: Reihe von Photodioden
- 9.3: einzelne Lichtschranken
- 9.4: Translucente Oberfläche
- 9.5: Insekt oder Verschmutzung
- 9.6: nicht sensitiver Bereich
- 11.1: durchschreitende Person
- 11.2: Sendelichtleiterpaar
- 11.3: oberes Lichtfelderpaar
- 11.4: Empfangslichtleiterpaar
- 11.5: Sende-Lichtleiterpaar
- 11.6: unteres Lichtfelderpaar
- 11.7: Empfangslichtleiterpaar
- 12.1: Signalverläufe
- 12.2: Signalverläufe
- 12.3: Signalminimierung im Bereich der höchsten Körperstelle
- 13.3: Signalerhöhung
- 13.4: Bereich totaler Abschattung
- 13.5: Teilabschattung
- 13.7: weiterer Zeitverlauf
- 13.8: Zeitpunkt der Korrelation
- 14.1: Lichtleiterbeispiel
- 14.2: Lichtleiterbeispiel
- 14.3: Leuchtdiode
- 14.4: reflektive Fläche
- 14.5: nebeneinander angebrachte Lichtleiter
- 15.1: durchschreitende Person
- 15.2: sendender Lichtleiter für erstes Lichtfeld
- 15.3: sendender Lichtleiter für zweites Lichtfeld
- 15.5: empfangender Lichtleiter für erstes Lichtfeld
- 15.6: empfangender Lichtleiter für zweites Lichtfeld
- 15.7: sendender Lichtleiter für drittes Lichtfeld
- 15.8: sendender Lichtleiter für viertes Lichtfeld
- 15.9: empfangender Lichtleiter für drittes Lichtfeld
- 15.10: empfangender Lichtleiter für viertes Lichtfeld
- 15.11: translucente Scheibe
- 15.12: translucente Scheibe als durchgehende Fläche
- 16.13: erstes Lichtfeld einer Personenvereinzelung
- 16.14: zweites Lichtfeld einer Personenvereinzelung
- 16.15: drittes Lichtfeld einer Personenvereinzelung
- 16.16: viertes Lichtfeld einer Personenvereinzelung
- 18.1: reguläres Fahrzeug
- 18.2: "gestohlenes" Fahrzeug
- 18.4: Signalgröße ohne Abschattung
- 18.5: Schwellwert
- 18.6: Signalverlauf
- 18.7: Maximum der Abschattung
- 18.8: Zeitpunkt der Überschreitung des Schwellwertes
- 18.9: zweite Abschattung
- 18.10: Maximum der zweiten Abschattung
- M1: Messstrecke 1
- M2: Messstrecke 2
- A: Einzelperson
- B: Einzelperson
- C: Personengruppe
- D: Personengruppe
- E: Personengruppe

## Patentansprüche

1. Kontrolleinrichtung für einen zu überwachenden Raum auf den Zugang wenigstens eines Körpers (1.4) über einen Zugangsbereich (1.1) mit wenigstens einem eine Lichtstrahlung in den Zugangsbereich einbringenden Sendeelement und wenigstens einem die Lichtstrahlung empfangenden Empfangselement,
**dadurch gekennzeichnet, dass** dem Sendeelement wenigstens ein Lichtleiter (1.2) zugeordnet ist, der die in den Zugangsbereich (1.1) ausgesandte Lichtstrahlung als ein diffuses, flächiges Lichtfeld (4.3, 6.13) quer zu seiner Längsrichtung aussendet, und dass empfangsseitig wenigstens ein Lichtleiter (1.2) als Erfassungselement zum Erfassen des diffusen Lichtfelds quer zu seiner Längsrichtung und als Übermittlungsmittel zum Übermitteln des Lichts aus dem Lichtfeld zum Empfangselement vorgesehen ist.

2. Kontrolleinrichtung nach Anspruch 1, **dadurch gekennzeichnet, dass** der dem Sendelement zugeordnete Sendelichtleiter (2.2) und/oder der dem Empfangselement zugeordnete Empfangslichtleiter (4.2) eine Struktur (2.3), die vorzugsweise eine gelaserte Struktur aus kleinen gelaserten Punkten mit gerundeten Einbuchtungen ist, zur Abstrahlung bzw. zur Einstrahlung des Lichtfelds (4.3, 6.13) quer zur Längsrichtung des Lichtleiters aufweist, wobei vorzugsweise die reflektive und/oder spritzgegossene und/oder gelaserte Struktur (2.3) mit zunehmendem Abstand vom Sendeelement vermehrt vorgesehen ist.

3. Kontrolleinrichtung nach einem der vorhergehenden Ansprüche, **dadurch gekennzeichnet, dass** die Lichtfeld (4.3, 6.13) erzeugenden Mittel so angeordnet sind, dass die Lichtstrahlung zumindest teilweise mit einer im Hinblick auf den Lichtleiter axialen und radialen Komponente abgestrahlt wird.

4. Kontrolleinrichtung nach einem der vorhergehenden Ansprüche, **dadurch gekennzeichnet, dass** für jedes Lichtfeld ein einziges Sendelement, vorzugsweise eine Sende-LED (2.1), das Licht in den Sendelichtleiter (2.2) einstrahlt und ein einziger Empfänger, vorzugsweise eine Photodiode (6.8), vorgesehen ist, der das Licht aus dem Empfangslichtleiter (4.2) empfängt.

5. Kontrolleinrichtung nach einem der vorhergehenden Ansprüche, **dadurch gekennzeichnet, dass** eine Auswerteeinheit (6.38) vorgesehen ist, die eine durch den Zu- oder Durchgang eines Körpers (1.4) in bzw. durch das Lichtfeld (4.3, 6.13) erfolgende Abschattung des Lichtfelds in Richtung auf den Empfangslichtleiter auswertet.

6. Kontrolleinrichtung nach einem der vorhergehenden Ansprüche, **dadurch gekennzeichnet, dass** wenigstens zwei von einer Auswerteeinheit (6.38) vorzugsweise getrennt ausgewertete Lichtfelder (4.3, 6.13) in Bewegungsrichtung des Körpers (1.4) hintereinander angeordnet sind.

7. Kontrolleinrichtung nach Anspruch 6, **dadurch gekennzeichnet, dass** die Lichtfeld erzeugenden Mittel, die Sendelichtleiter und Empfangslichtleiter für die beiden vorzugsweise parallel zueinander angeordneten Lichtfelder (4.3, 6.13) nebeneinander angeordnet sind.

8. Kontrolleinrichtung nach einem der Ansprüche 6 oder 7, **dadurch gekennzeichnet, dass** die Lichtfelder in mehrere übereinander angeordnete Teillichtfelder aufgeteilt sind, die von der Auswerteeinheit (6.38) getrennt ausgewertet werden.

9. Kontrolleinrichtung nach einem der Ansprüche 6 bis 8, **dadurch gekennzeichnet, dass** bei Anwendung mehrerer einander benachbarter Lichtfelder (4.3, 6.13) Mittel zur Vermeidung eines Übersprechens vorgesehen sind.

10. Kontrolleinrichtung nach einem der vorhergehenden Ansprüche, **dadurch gekennzeichnet, dass** im Zugangsbereich (1.1) wenigstens zwei winklig zueinander angeordnete, vorzugsweise sich im Zugangsbereich (1.1) kreuzende, Lichtfeldbereiche vorgesehen sind.

11. Kontrolleinrichtung nach Anspruch 10, **dadurch gekennzeichnet, dass** jeder Lichtfeldbereich wenigstens zwei in Bewegungsrichtung des Körpers hintereinander und/oder wenigstens zwei übereinander angeordnete Lichtfelder (16.13, 16.14, 16.15, 16.16) aufweist.

12. Kontrolleinrichtung nach einem der vorhergehenden Ansprüche, **dadurch gekennzeichnet, dass** Erkennungsmittel vorgesehen sind, die den Zu- oder Durchgang eines Körpers (1.4) erkennen, sobald ein vorgegebener oder vorgebbarer Schwellwert (7.6, 18.5), der vorzugsweise fest oder dynamisch gesteuert ist, an Gesamtlichtleistung (7.1) unterschritten wird.

13. Kontrolleinrichtung nach einem der vorhergehenden Ansprüche, **dadurch gekennzeichnet, dass** der zeitliche Verlauf der Abschattung entsprechend einer Reduzierung der Gesamtlichtleistung (7.1) das Profil des den Zugangsbereich (1.1) durchquerenden Körpers (1.4) wiedergibt.

14. Kontrolleinrichtung nach einem der vorhergehenden Ansprüche, **dadurch gekennzeichnet, dass** Vergleichsmittel zur zeitlichen Korrelation der Schwellwertunterschreitung und/oder der Gesamtlichtleistung (7.1) einander zugeordneter Lichtfelder vorgesehen sind.

15. Kontrolleinrichtung nach einem der vorhergehenden Ansprüche, **dadurch gekennzeichnet, dass** ein Zähler zur Bestimmung von den Zugangsbereich (1.1) durchquerenden Körpern (1.4) vorgesehen ist, der die Maxima der von den Erkennungsmitteln erkannten maximalen Abschattung je Körper (1.4) erfasst.

16. Kontrolleinrichtung nach einem der vorhergehenden Ansprüche, **dadurch gekennzeichnet, dass** im Empfangslichtleiter (4.2) ein Fluoreszenzfarbstoff vorgesehen ist.

17. Verfahren zum Kontrollieren eines Zugangsbereichs (1.1) zu einem zu überwachenden Raum auf den Zugang wenigstens eines Körpers (1.4) durch Aussenden von Lichtstrahlung mittels wenigstens einem eine Lichtstrahlung in den Zugangsbereich einbringenden Sendeelement und wenigstens einem die Lichtstrahlung empfangenden Empfangselement,
**gekennzeichnet durch** das Erzeugen wenigstens eines von einem Lichtleiter quer zu dessen Längserstreckung in den Zugangsbereich (1.1) diffus ausgesandten, flächigen Lichtfelds, empfangsseitiges Erfassen des diffusen Lichtfelds **durch** einen Lichtleiter ebenfalls quer zu dessen Längserstreckung und Übermitteln des diffus erfassten Lichts im Lichtleiter zum Empfangselement.

18. Verfahren nach Anspruch 17, **dadurch gekennzeichnet, dass** die Lichtstrahlung für das Lichtfeld zumindest teilweise mit einer im Hinblick auf den Lichtleiter axialen und radialen Komponente abgestrahlt wird.

19. Verfahren nach Anspruch 17 oder 18, **dadurch gekennzeichnet, dass** für jedes Lichtfeld die Lichtstrahlung über ein einziges Sendelement vorzugsweise eine Sende-LED (2.1) in einen Sendelichtleiter (2.2) eingestrahlt und über einen einzigen Empfänger, vorzugsweise eine Photodiode (6.8) aus einem Empfangslichtleiter (4.2) empfangen wird.

20. Verfahren nach einem der Ansprüche 17 bis 19, **dadurch gekennzeichnet, dass** zur Bestimmung eines Zu- oder Durchgang eines Körpers (1.4) in bzw. durch das Lichtfeld (4.3, 6.13) die Abschattung des Lichtfelds in Richtung auf den Empfangslichtleiter ausgewertet wird und ein Zu- oder Durchgang eines Körpers (1.4) erkannt wird, sobald ein vorgegebener oder vorgebbarer Schwellwert (7.6, 18.5), der vorzugsweise fest oder dynamisch gesteuert ist, an Gesamtlichtleistung (7.1) unterschritten wird.

21. Verfahren nach einem der Ansprüche 17 bis 20, **gekennzeichnet durch** das Anordnen von wenigstens zwei von einer Auswerteeinheit (6.38) vorzugsweise getrennt ausgewerteten Lichtfeldern (4.3, 6.13) in Bewegungsrichtung des Körpers (1.4) hintereinander oder übereinander und zeitliches Korrelieren der Schwellwertunterschreitung und/oder der Gesamtlichtleistung (7.1) einander zugeordneter Lichtfelder.

22. Verfahren nach einem der Ansprüche 17 bis 21, **dadurch gekennzeichnet, dass** im Zugangsbereich (1.1) wenigstens zwei Lichtfeldbereiche im Winkel zueinander in den Zugangsbereich eingestrahlt werden vorzugsweise, dass sich die Lichtfeldbereiche im Zugangsbereich (1.1) kreuzen.

23. Verfahren nach einem der Ansprüche 17 bis 22, **dadurch gekennzeichnet, dass** der zeitliche Verlauf der Abschattung entsprechend einer Reduzierung der Gesamtlichtleistung (7.1) dem Profil des den Zugangsbereich (1.1) durchquerenden Körpers (1.4) entspricht.

24. Verfahren nach einem der Ansprüche 17 bis 23, **gekennzeichnet durch** das Erfassen der Anzahl der maximalen Abschattungen zur Bestimmung der Anzahl der Körper (1.4).

25. Verfahren nach Anspruch 24, **dadurch gekennzeichnet, dass**, wenn wenigstens ein Lichtfeldbereich mehrere, z.B. zwei Maxima an Abschattung erkennt, mehrere, z.B. zwei Körper erkannt werden.

## Claims

1. A monitoring device for a space that is to be monitored for the entry of at least one body (1.4) via an access area (1.1) comprising at least one emitting element which introduces luminous radiation into the access area and at least one receiving element which receives the luminous radiation,
**characterised in that** there is associated with the emitting element at least one light guide (1.2) which emits the luminous radiation emitted into the access area (1.1) as a diffuse planar light field (4.3, 6.13) transversely to the longitudinal direction of the at least one light guide, and **in that** at the receiving end there is provided at least one light guide (1.2) as detecting element for detecting the diffuse light field transversely to the longitudinal direction of the at least one light guide and as transmitting means for transmitting the light out of the light field to the receiving element.

2. A monitoring device in accordance with Claim 1, **characterised in that** the emitting light guide (2.2) associated with the emitting element and/or the receiving light guide (4.2) associated with the receiving element comprises a structure (2.3), preferably being a lasered structure consisting of small lasered points with rounded indentations, for respectively radiating or receiving the light field (4.3, 6.13) in a direction transverse to the longitudinal direction of the light guide, the structure being reflective and/or injection moulded and/or lasered (2.3) and provided to be argumented with increasing distance from the emitting element.

3. A monitoring device in accordance with any of the preceding Claims, **characterised in that** the means for producing the light field (4.3, 6.13) are arranged in such a manner that the luminous radiation is radiated at least partially with a component that is radial and axial in regard to the light guide.

4. A monitoring device in accordance with any of the preceding Claims, **characterised in that** for each light field there is provided a single emitting element, preferably a light emitting LED (2.1) which irradiates light into the emitting light guide (2.2) and a single receiver, preferably a photodiode (6.8), which receives the light from the receiving light guide (4.2).

5. A monitoring device in accordance with any of the preceding Claims, **characterized in that** there is provided an evaluating unit (6.38) which evaluates the shadowing of the light field in the direction of the receiving light guide that occurs upon the entry or passage of a body (1.4) into or through the light field (4.3, 6.13).

6. A monitoring device in accordance with any of the preceding Claims, **characterised in that** at least two light fields (4.3, 6.13) which are preferably evaluated separately by an evaluating unit (6.38) are arranged one behind the other in the direction of motion of the body (1.4).

7. A monitoring device in accordance with Claim 6, **characterized in that** the means for producing the light field, the emitting light guide and the receiving light guide for the two preferably mutually parallel light fields (4.3, 6.13) are arranged next to one another.

8. A monitoring device in accordance with either of the Claims 6 or 7, **characterised in that** the light fields are subdivided into a plurality of partial light fields which are arranged one above the other and are evaluated separately by the evaluating unit (6.38).

9. A monitoring device in accordance with any of the Claims 6 to 8, **characterised in that**, when using a plurality of mutually neighbouring light fields (4.3, 6.13), means are provided for preventing cross-talk.

10. A monitoring device in accordance with any of the preceding Claims, **characterised in that** there are provided in the access area (1.1) at least two light field regions that are arranged at an angle to one another and preferably cross in the access area (1.1)..

11. A monitoring device in accordance with Claim 10, **characterised in that** each light field region comprises at least two light fields (16.13, 16.14, 16.15, 16.16) which are arranged one behind the other in the direction of motion of the body and/or which are arranged one above the other.

12. A monitoring device in accordance with any of the preceding Claims, **characterised in that** detection means are provided which detect the entry or the passage of a body (1.4) as soon as the total luminous power (7.1) falls below a predefined or predefinable threshold value (7.6, 18.5) preferably being fixed or dynamically controlled.

13. A monitoring device in accordance with any of the preceding Claims, **characterised in that** the timing waveform of the shadowing process corresponding to a reduction of the total luminous power (7.1) reproduces the profile of the body (1.4) crossing the access area (1.1).

14. A monitoring device in accordance with any of the preceding Claims, **characterised in that** comparison means are provided for the temporal correlation of the falling below a threshold value and/or the total luminous power (7.1) of mutually associated light fields.

15. A monitoring device in accordance with any of the preceding Claims, **characterized in that** a counter is provided for determining the bodies (1.4) crossing the access area (1.1), said counter registering the maximum values of the maximum shadowing effect detected by the detection means for each body (1.4).

16. A monitoring device in accordance with any of the preceding Claims, **characterised in that** a fluorescent colouring material is provided in the receiving light guide (4.2).

17. A method of monitoring an access area (1.1) to a space which is to be monitored for the entry of at least one body (1.4) by emitting luminous radiation by means of at least one emitting element which introduces luminous radiation into the access area and at least one receiving element which receives the luminous radiation,
**characterized by** the production of at least one planar light field which is emitted diffusely from a light guide transversely to its longitudinal direction into the access area (1.1), detection of the diffuse light field at the receiving end through a light guide also transversely to its longitudinal direction and transmission of the diffusely detected light to the receiving element within the light guide.

18. A method in accordance with Claims 17, **characterised in that** the luminous radiation for the light field is at least partially radiated with a component that is radial and axial in regard to the light guide.

19. A method in accordance with Claims 17 or 18, **characterised in that** for each light field the luminous radiation is irradiated into an emitting light guide (2.2) by a single emitting element, preferably a light emitting LED (2.1) and is received from a receiving light guide (4.2) by a single receiver, preferably a photodiode (6.8).

20. A method in accordance with any of the Claims 17 to 19, **characterised in that** for the purposes of determining the entry or passage of a body (1.4) into or through the light field (4.3, 6.13), the shadowing of the light field in the direction of the receiving light guide is evaluated and an entry or a passage of a body (1.4) is detected as soon as the total luminous power (7.1) falls below a predefined or predefinable threshold value (7.6, 18.5) preferably being fixed or dynamically controlled

21. A method in accordance with any of the Claims 17 to 20, **characterized by** the arrangement of at least two light fields (4.3, 6.13) that are preferably separately evaluated by an evaluating unit (6.38) one behind the other in the direction of motion of the body (1.4) or one above the other, and temporal correlation of the falling below the threshold value and/or the total luminous power (7.1) of mutually associated light fields.

22. A method in accordance with any of the Claims 17 to 21, **characterised in that**, in the access area (1.1), at least two light field regions are irradiated into the access area at an angle to one another, preferably that the light field regions cross in the access area (1.1).

23. A method in accordance with any of the Claims 17 to 22, **characterised in that** the timing waveform of the shadowing process corresponding to a reduction of the total luminous power (7.1) corresponds to the profile of the body (1.4) crossing the access area (1.1).

24. A method in accordance with any of the Claims 17 to 23, **characterized by** the registration of the number of maximum shadowing effects for determining the number of bodies (1.4).

25. A method in accordance with Claim 24, **characterised in that**, if at least one light field region detects a plurality of, e.g. two maximum shadow effects, a plurality of, e.g. two bodies are detected.

## Revendications

1. Dispositif de contrôle pour un espace à surveiller quant à l'accès d'au moins un corps (1.4) à travers une zone d'accès (1.1) avec au moins un élément émetteur introduisant un rayonnement de lumière dans la zone d'accès, et au moins un élément récepteur recevant le rayonnement de lumière,
**caractérisé en ce qu'**à l'élément émetteur est associé au moins un guide de lumière (1.2) qui émet le rayonnement de lumière émis dans la zone d'accès (1.1) sous la forme d'un champ de lumière (4.3, 6.13) plat diffus transversalement à sa direction longitudinale, et **en ce que**, côté réception, il est prévu au moins un guide de lumière (1.2) servant d'élément de détection pour détecter le champ de lumière diffus transversalement à sa direction longitudinale et servant de moyen de transmission pour transmettre la lumière du champ de lumière vers l'élément de réception.

2. Dispositif de contrôle selon la revendication 1, **caractérisé en ce que** le guide de lumière d'émission (2.2) associé à l'élément émetteur et/ou le guide de lumière de réception (4.2) associé à l'élément récepteur comporte une structure (2.3), qui est de préférence une structure à action laser constituée de petits points à action laser avec de petites anses arrondies, pour l'émission ou la réception du rayonnement du champ de lumière (4.3, 6.13) transversalement à la direction longitudinale du guide de lumière, la structure (2.3) de réflexion et/ou moulée par injection et/ou à action laser étant prévue en plus grand nombre au fur et à mesure que la distance croît par rapport à l'élément émetteur.

3. Dispositif de contrôle selon l'une quelconque des revendications 1 ou 2, **caractérisé en ce que** les moyens produisant le champ de lumière (4.3, 6.13) sont disposés de manière que le rayonnement de lumière soit émis au moins en partie avec une composante axiale et radiale par rapport au guide de lumière.

4. Dispositif de contrôle selon l'une quelconque des revendications 1 à 3, **caractérisé en ce que** pour chaque champ de lumière il est prévu un seul élément émetteur, de préférence une LED émettrice (2.1) qui émet la lumière dans le guide de lumière d'émission (2.2) et un seul récepteur, de préférence une photodiode (6.8) qui reçoit la lumière provenant du guide de lumière de réception (4.2).

5. Dispositif de contrôle selon l'une quelconque des revendications 1 à 4, **caractérisé en ce qu'**il est prévu une unité d'évaluation (6.38) qui évalue une occultation du champ de lumière en direction du guide de lumière de réception, se produisant du fait de l'accès ou du passage d'un corps (1.4) dans ou à travers le champ de lumière (4.3, 6.13).

6. Dispositif de contrôle selon l'une quelconque des revendications 1 à 5, **caractérisé en ce qu'**au moins deux champs de lumière (4.3, 6.13), évalués de préférence séparément par une unité d'évaluation (6.38), sont disposés l'un derrière l'autre dans la direction du mouvement du corps (1.4).

7. Dispositif de contrôle selon la revendication 6, **caractérisé en ce que** les moyens produisant le champ de lumière, les guides de lumière d'émission et guides de lumière de réception pour les deux champs de lumière (4.3, 6.13), disposés de préférence parallèlement l'un à l'autre, sont disposés côte à côte.

8. Dispositif de contrôle selon l'une quelconque des revendications 6 ou 7, **caractérisé en ce que** les champs de lumière sont divisés en plusieurs champs de lumière partiels disposés les uns au-dessus des autres, qui sont évalués séparément par l'unité d'évaluation (6.38).

9. Dispositif de contrôle selon l'une quelconque des revendications 6 à 8, **caractérisé en ce que** sont prévus des moyens pour éviter une diaphonie dans le cas de l'utilisation de plusieurs champs de lumière (4.3, 6.13) voisins les uns des autres.

10. Dispositif de contrôle selon l'une quelconque des revendications 1 à 9, **caractérisé en ce que** dans la zone d'accès (1.1) il est prévu au moins deux zones de champ de lumière disposées en angle l'une par rapport à l'autre, se croisant de préférence dans la zone d'accès (1.1).

11. Dispositif de contrôle selon la revendication 10, **caractérisé en ce que** chaque zone de champ de lumière comporte au moins deux champs de lumière (16.13, 16.14, 16.15, 16.16) disposés l'un derrière l'autre dans la direction de mouvement du corps et/ou au moins deux champs de lumière (16.13, 16.14, 16.15, 16.16) disposés l'un au-dessus de l'autre.

12. Dispositif de contrôle selon l'une quelconque des revendications 1 à 11, **caractérisé en ce que** sont prévus des moyens de reconnaissance qui reconnaissent l'accès ou le passage d'un corps (1.4) dès qu'une valeur de seuil (7.6, 18.5) prédéfinie ou à prédéfinir, qui est commandée de préférence de manière fixe ou dynamique, est sous-dépassée en puissance de lumière globale (7.1).

13. Dispositif de contrôle selon l'une quelconque des revendications 1 à 12, **caractérisé en ce que** la variation dans le temps de l'occultation, correspondant à une réduction du flux global de lumière (7.1), traduit le profil du corps (1.4) traversant la zone d'accès (1.1).

14. Dispositif de contrôle selon l'une quelconque des revendications 1 à 13, **caractérisé en ce que** des moyens de comparaison sont prévus pour la corrélation temporelle de la distinction de valeurs de seuil et/ou du flux global de lumière (7.1) de champs de lumière associés les uns aux autres.

15. Dispositif de contrôle selon l'une quelconque des revendications 1 à 14, **caractérisé en ce qu'**il est prévu un compteur pour déterminer des corps (1.4) traversant la zone d'accès (1.1), qui relève les maxima de l'occultation maximale, reconnue par les moyens de reconnaissance, pour chaque corps (1.4).

16. Dispositif de contrôle selon l'une quelconque des revendications 1 à 15, **caractérisé en ce qu'**il est prévu un colorant fluorescent dans le guide de lumière de réception (4.2).

17. Procédé pour contrôler une zone d'accès (1.1) à un espace à surveiller quant à l'accès d'au moins un corps (1.4), par émission d'un rayonnement de lumière au moyen d'au moins un élément émetteur, introduisant un rayonnement de lumière dans la zone d'accès, et au moins un élément récepteur recevant le rayonnement de lumière,
**caractérisé par** la production d'au moins un champ de lumière plat, émis de manière diffuse par un guide de lumière transversalement à sa direction longitudinale, dans la zone d'accès (1.1), par la détection côté réception du champ de lumière diffus par un guide de lumière également transversalement à son étendue longitudinale et transmission de la lumière détectée de manière diffuse dans le guide de lumière, vers l'élément récepteur.

18. Procédé selon la revendication 17, **caractérisé en ce que** le rayonnement de lumière pour le champ de lumière est émis au moins en partie avec une composante axiale et radiale par rapport au guide de lumière.

19. Procédé selon la revendication 17 ou 18, **caractérisé en ce que** pour chaque champ de lumière le rayonnement de lumière est introduit par un seul élément émetteur de préférence une LED émettrice (2.1) dans un guide de lumière d'émission (2.2), et est reçu par un seul récepteur, de préférence une photodiode (6.8), depuis un guide de lumière de réception (4.2).

20. Procédé selon l'une quelconque des revendications 17 à 19, **caractérisé en ce que** pour déterminer un accès ou le passage d'un corps (1.4) dans ou à travers le champ de lumière (4.3, 6.13), l'occultation du champ de lumière en direction du guide de lumière de réception est évaluée et un accès au passage d'un corps (1.4) est reconnu dès qu'une valeur de seuil (7.6, 18.5) prédéfinie ou à prédéfinir, qui est commandée de préférence de manière fixe ou dynamique, est sous-dépassée en flux global de lumière (7.1).

21. Procédé selon l'une quelconque des revendications 17 à 20, **caractérisé par** la disposition d'au moins deux champs de lumière (4.3, 6.13), évalués de préférence séparément par une unité d'évaluation (6.38), les uns derrière les autres ou les uns au-dessus des autres dans la direction de mouvement du corps (1.4), et par la corrélation dans le temps du sous-dépassement de valeurs de seuil et/ou du flux global de lumière (7.1) de champs de lumière associés les uns aux autres.

22. Procédé selon l'une quelconque des revendications 17 à 21, **caractérisé en ce que** dans la zone d'accès (1.1) au moins deux zones de champ de lumière sont introduites dans la zone d'accès, en formant un angle entre elles, de préférence **en ce que** les zones de champ de lumière se croisent dans la zone d'accès (1.1).

23. Procédé selon l'une quelconque des revendications 17 à 22, **caractérisé en ce que** la variation dans le temps de l'occultation correspondant à une réduction du flux global de lumière (7.1) correspond au profil du corps (1.4) traversant la zone d'accès (1.1).

24. Procédé selon l'une quelconque des revendications 17 à 23, **caractérisé par** le relevé du nombre d'occultations maximal pour déterminer le nombre de corps (1.4).

25. Procédé selon la revendication 24, **caractérisé en ce que** plusieurs corps, par exemple deux sont reconnus lorsqu'au moins une zone de champ de lumière reconnaît plusieurs, par exemple deux maxima d'occultation.
